# EUROPÄISCHE PATENTSCHRIFT

(11) **EP 1 090 204 B1**
(45) Veröffentlichungstag und Bekanntmachung des Hinweises auf die Patenterteilung: **30.09.2009**
(21) Anmeldenummer: 99936408.6
(22) Anmeldetag: 26.05.1999
(51) Int. Cl.: E06B 9/262

(54) **VERSCHLUSSEINRICHTUNG FÜR FENSTER, TÜREN OD.DGL. ÖFFNUNGEN**
CLOSING DEVICE FOR WINDOWS, DOORS OR SIMILAR OPENINGS
DISPOSITIF DE FERMETURE POUR FENETRES, PORTES OU OUVERTURES SIMILAIRES

(30) Priorität: 16.06.1998 DE 19826420
(43) Veröffentlichungstag der Anmeldung: 11.04.2001
(73) Patentinhaber: Knauer, Dieter, 72622 Nürtingen-Hardt (DE)
(72) Erfinder: Knauer, Dieter, 72622 Nürtingen-Hardt (DE)
(74) Vertreter: Kratzsch, Volkhard
(86) Internationale Anmeldenummer: PCT/DE1999/001640
(87) Internationale Veröffentlichungsnummer: WO 1999/066163

(56) Entgegenhaltungen:
- EP-A- 0 240 065
- DE-U- 29 601 646
- FR-A- 1 256 866
- US-A- 4 861 090
- US-A- 5 010 939
- US-A- 5 092 383
- US-A- 5 183 092
- US-A- 5 584 329

## Beschreibung

Die Erfindung bezieht sich auf eine Verschlusseinrichtung für Fenster, Türen od. dgl. Öffnungen mit den Merkmalen im Oberbegriff des Anspruchs 1.

In einer nicht vorveröffentlichten deutschen Patentanmeldung (No. 197 24 540.4, angemeldet 11.06.1997) ist eine Verschlusseinrichtung vorgenannter Art beschrieben, die einen Behang aus miteinander um etwa parallele Achsen etwa ziehharmonikaartig gelenkig verbundenen Behangsektionen aufweist, wobei der Behang an einem Ende etwa im Bereich der dortigen Behangsektion an einer zur Achse der Behangsektion etwa parallelen Halteleiste befestigt ist und am anderen Ende etwa im Bereich der dortigen Behangsektion einen daran befestigten Halter aufweist. Zumindest einer der beiden sich zwischen der Halteleiste und dem Halter erstreckenden Ränder des Behangs verläuft zumindest zum Teil von einer zur Mittenlängsachse der Halteleiste etwa rechtwinkligen Linie abweichend. Der Behang weist auf seiner Länge zwischen der Halteleiste und dem Halter ein Übermaß als Ausgleichsspeicher zur Bildung mindestens eines Ausgleichselements auf. Dieses mindestens eine Ausgleichselement bildet sich als Fächer mit an einer Seite erfolgender Auffächerung einiger Behangsektionen und an der anderen Seite erfolgenden Schichtung dieser Behangsektionen aus, während der daran angrenzende übrige Teil des Behanges im ausgezogenen Zustand zu im Wesentlichen parallel zueinander verlaufenden Behangsektionen führt.

Ferner sind andere Arten von Verschlusseinrichtungen bekannt (DE 89 09 836 U1), bei denen die Behangsektionen und deren Achsen parallel zu einer vorgesehenen Halteleiste verlaufen und der am anderen Ende angreifende Halter im Wesentlichen ebenfalls parallel zur Halteleiste und zu den Behangsektionen ausgerichtet ist.

Eine bekannte Verschlusseinrichtung (US-A-4 861 090) hat zwei Abdeckelemente, die jeweils einzelne bewegliche, auf- und zufächerbare Elementteile aufweisen, die zu einem flächigen Verschluss auffächerbar sind und zu einem Stapel zufächerbar sind. Dabei ist das mindestens eine Abdeckelement hinsichtlich seiner möglichen Auffächerung und hinsichtlich seiner Randkontur, die sich im aufgefächerten Zustand der Elementteile ergibt, an den jeweiligen Randverlauf der Öffnung derart angepasst, dass die Öffnung im Wesentlichen völlig abgedeckt ist. Ferner weist das Abdeckelement zwei im aufgefächerten Zustand unter einem Winkel zueinander verlaufende Randteile auf, von denen jeder an einem Ende des mindestens einen Abdeckelements angreift und die in einem gemeinsamen Bereich in Form einer Schwenkachse zusammengeführt sind. Dabei ist ein Randteil kürzer bemessen als der andere Randteil. Der kürzere Randteil ist in Bezug auf den festgehaltenen längeren Randteil schwenkbar. Dabei besteht das mindestens eine Abdeckelement aus einzelnen Elementteilen, die als längliche Streifen ausgebildet und in einem gemeinsamen Zentrum, im Bereich der Schwenkachse, zusammengehalten sind. Diese einzelnen Streifen liegen im zugefächerten Zustand hintereinander und überdecken sich ähnlich einem Gefieder im aufgefächerten Zustand derart, dass dadurch eine Abschattung der Öffnung geschieht. An dem Ende, das dem gemeinsamen Schwenkpunkt gegenüber liegt, sind die einzelnen Elementeile mit Öffnungen versehen, durch die sich ein Führungsmittel in Form einer Schnur hindurcherstreckt. Dieses Führungsmittel hat die Aufgabe, das Abdeckelement zu führen, wenn es aufgefächert oder zugefächtert wird. Die Führung geschieht dadurch, dass die Schnur durch entsprechende Öffnungen in den einzelnen Elementteilen hindurchgeführt ist, so dass beim Auffächern und Zufächern durch die Schnur eine Führung vorgegeben ist. Das Abdeckelement hat auf dem Schwenkbereich zwischen beiden Randteilen Elementteile mit variierender Länge, gemessen ausgehend von der Schwenkachse, wobei sich dieses so gestaltete Abdeckelement an beide Randteile anschließt. Beim gesamten Abdeckelement nimmt die Länge der Elementteile in Schwenkrichtung des kürzeren Randteils zum längeren Randteil hin zu.

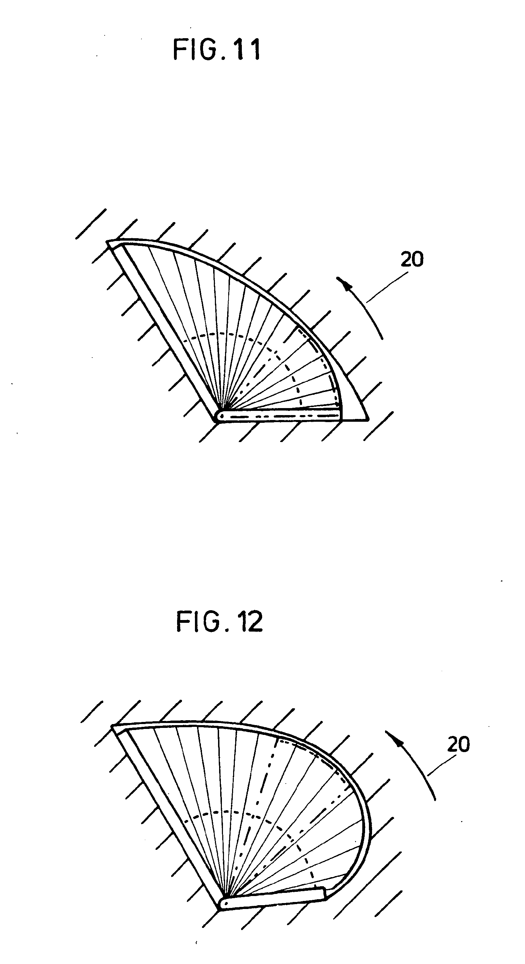

Aus EP-A-240 065 sind jeweils dreieckförmig ausfahrbare Verschlusseinrichtungen bekannt, die für Dreieckfenster bestimmt sind, wobei zwischen einem kürzeren und einem längeren Randteil ein Abdeckelement vorgesehen ist, das aus einzelnen Elementteilen gebildet ist, die in einem gemeinsamen Bereich zusammen mit den beiden Randteilen zusammengeführt sind und in Abstand von diesem gemeinsamen Bereich von durch Öffnungen der Elementteile hindurch geführten Seilen oder Schnüren durchzogen sind, die in diesem Endbereich der Führung und auch der Betätigung dienen. Bei allen Ausführungsformen haben die Elementteile variierende Länge. Der längere, obere Randteil ist am oberen schräg verlaufenden Fensterrand angebracht. In Bezug auf diesen ist der untere Randteil bewegbar, der bei nicht verschlossener Öffnung hochgezogen ist und etwa parallel zum oberen Randteil verläuft. Zum Abschatten der Öffnung wird unter Nutzung der Gewichtskraft der untere Randteil mittels der Führungs- und Betätigungsmittel herabgelassen, wodurch das Abdeckelement in seine aufgefächerte Schließstellung gelangt. Diese Verschlusseinrichtung verlangt zu ihrer Funktionsfähigkeit die Anordnung innerhalb einer vertikalen Ebene und setzt dazu die vertikale Wirkung der Gewichtskraft voraus. Aus der US-A 5 092 383 ist eine ähnliche, innerhalb einer Vertikalebene hängende und in Vertikalrichtung zu betätigende Verschlusseinrichtung bekannt. Bei dort in Fig. 11 bis 19 gezeigten Ausführungsbeispielen ist die Verschlusseinrichtung in vertikaler Richtung hängend ausgebildet, die allein aufgrund der vertikalen Gewichtskraft wirkt. Die dortige Verschlusseinrichtung weist zwei unterschiedlich gestaltete Abdeckelemente auf. Ein Abdeckelement hat rechteckförmige Kontur und hängt in vertikaler Richtung herab. Die durch Plissieren entstandenen einzelnen Elementteile dieses Abdeckelements verlaufen horizontal und dabei parallel zueinander und parallel zum beweglichen unteren Randteil. Der untere Randteil hängt frei herunter am Abdeckelement und ist mittels Schnüren zum Freigeben der Öffnung hochziehbar, soweit, bis dieser untere Randteil eine dazu parallele obere Schiene erreicht. Das etwa rechteckförmige Abdeckelement hat Elementteile jeweils gleich bleibender Länge. Das andere, darüber befindliche Abdeckelement hat Elementteile mit variierender Länge, die zum oberen, am schrägverlaufenden Öffnungsrand befestigten feststehenden Randteil zunimmt. Dieses obere Abdeckelement ist an dieser oberen, schrägen, feststehenden Schiene angebracht. Im heruntergelassenen Zustand (Fig. 17) ist am unteren horizontalen Rand dieses oberen zweiten Abdeckelements eine mittlere Schiene befestigt, die das obere Abdeckelement am unteren Rand stützt und zugleich das andere, untere Abdeckelement an dessen oberem Rand hält. Diese zusätzliche mittlere Schiene ist mit dem feststehenden oberen Randteil im Bereich eines seitlichen Gelenkes gelenkig verbunden, so dass nur bei diesem oberen Abdeckelement der obere, feste Randteil und diese zusätzliche mittlere Schiene im aufgefächerten Zustand unter einem Winkel zueinander verlaufen und in einem gemeinsamen Bereich zusammengeführt sind. Bei einem anderen Ausführungsbeispiel (Fig. 18A) sind die Verhältnisse ebenso, wobei die Anordnung nur auf den Kopf gestellt ist. Der schräg verlaufende untere Randteil ist fest mit dem unteren Rand einer abzudeckenden Öffnung verbunden. Die mittlere Schiene ist in Bezug auf diesen unteren Randteil um eine Schwenkachse schwenkbar zwischen einer ausgeschwenkten und zum unteren Randteil hin eingeschwenkten Position schwenkbeweglich. Der obere horizontale Randteil ist mittels Schnüren hochziehbar, wodurch das eine daran feste rechteckige Abdeckelement hochziehbar ist in die aufgefächerte Stellung, wodurch die mittlere Schiene hochgezogen und über diese das andere untere Abdeckelement zur Dreieckform aufgefächert wird.

Aus der US-A-5 010 939 ist eine Verschlusseinrichtung bekannt, die ein Abdeckelement aufweist, welches eine halbkreisförmige Öffnung abschatten soll. Das Abdeckelement hat einen einzigen dieses bildenden Behangbereich, der ein Auffächern zu etwa 180° und ein Zufächern zu einem Stapel ermöglicht, wobei die Elementteile jeweils gleich bleibende Längen aufweisen.

Aus der FR-A-1 256 866 ist eine Verschlusseinrichtung bekannt, die zwischen zwei radialen Armen sich erstreckende Flächenbereiche aufweist, die beim Ausschwenken der Arme um eine Schwenkachse ausgefaltet und in Abdeckstellung überführt werden und die beim gegensinnigen Schwenken der Arme eingefaltet werden. Die Anordnung ist ähnlich einem Fächer gestaltet.

Aus der DE-U-296 01 646 ist eine Verschlusseinrichtung in Form eines Faltenstores bekannt, die einen beweglichen, um eine zentrale Achse schwenkbaren Radialarm aufweist, der am Ende über einen Schlitten in einer bogenförmigen Schiene geführt ist und an dem ein Faltenstore mit einem Ende befestigt ist, dessen anderes Ende an einem feststehenden waagerechten Randteil angebracht ist. Der Faltenstore ist von einer Schließschnur durchzogen, die zur Betätigung des radialen Armes dient, wozu auch noch weitere Schnüre vorgesehen sind. Die Schnüre sollen beim Öffnen die regelmäßige Faltenbildung fördern und zu einer regelgerechten Lage des Behanges im geschlossenen Zustand beitragen. Sie dienen somit der Stabilisierung des Abdeckelements. Das. Abdeckelement hat Elementteile mit jeweils gleich bleibender Länge und ermöglicht in dieser Weise eine Abdeckung auf einem etwa vierteilkreisförmigen Sektor. Es kann sich mit einem zweiten gleichartigen Abdeckelement zu einer halbkreisförmigen Abdeckung ergänzen.

Bekannt ist ferner eine Verschlusseinrichtung (US-A-5 183 092), die ein zu einem Halbkreis auffächerbares Abdeckelement aufweist, bei dem die beiden endseitig daran angreifenden Randteile in einem gemeinsamen Bereich zumindest im Wesentlichen zusammengeführt sind. Das Abdeckelement ist am Außenrand mittels einer Führung geführt. Die Elementteile des Abdeckelements haben jeweils gleich bleibende Länge, wodurch eine Abdeckung über einen etwa halbkreisförmigen Öffnungsbereich möglich ist.

Eine andere bekannte Verschlusseinrichtung (US-A-5 584 329) weist zwei Abdeckelemente auf, wobei ein beiden gemeinsamer fester unterer Randteil und ein halbkreisförmiger oberer Randteil vorgesehen sind, sowie im Bereich der Symmetrieebene der dadurch umrahmten halbkreisförmigen Öffnung eine feststehende Stückstange. Das jeweilige Abdeckelement weist einzelne gefiederartig übereinander liegende Elementeile auf, die im Zentrum um eine Achse schwenkbar sind und am gegenüberliegenden freien Ende über ein dort angebrachtes Seil verbunden und gesichert sind. An der zentralen Stützstange sind über Umlenkungen Betätigungsschnüre geführt, die am der Stützstange nahen letzten Elementteil angreifen und bei Zug zum Auffächern des Abdeckelements führen. Bei einem Beispiel haben die Elementteile jeweils gleich bleibende Länge. Bei einem anderen Beispiel haben die Elementteile variierende Länge, die zum feststehenden längeren Randteil hin zunimmt. Dabei sind die einzelnen gefiedert angeordneten Elementteile über eine endseitige Verbindungsschnur geführt und gesichert. Durch die Gestaltung ist eine halbkreisförmige oder viertelkreisförmige Abdeckung einer Öffnung möglich oder auch jeweils etwa die Hälfte einer halbelliptischen Öffnung abdeckbar bei Elementteilen mit variierender Länge.

Der Erfindung liegt die Aufgabe zugrunde, eine Verschlusseinrichtung der eingangs genannten Art so zu gestalten, dass diese für vielfältige Konturen und/oder Größen von Öffnungen zu deren im Wesentlichen vollständiger Abdeckung in ihrer Abdeckstellung geeignet ist, wobei die Verschlusseinrichtung in einfacher Weise zwischen der Abdeckstellung und der Freigabestellung bewegbar ist und die Voraussetzungen für einen einfachen motorischen Antrieb der Verschlusseinrichtung erfüllt sind.

Die Aufgabe ist bei einer Verschlusseinrichtung der eingangs genannten Art gemäß der Erfindung durch die Merkmale im Patentanspruch 1 gelöst. Das mindestens eine Abdeckelement hat somit in besonders einfacher Weise die Gestalt etwa eines Fächers in etwa der Form, wie er als Handfächer bekannt ist, jedoch mit besonderer Anpassung an Größe und/oder Randkontur der jeweils abzudeckenden Öffnung. Wie bei einem Handfächer, so erfolgt die Auffächerung des Abdeckelements in der Weise, dass dieses um einen allen Elementteilen gemeinsamen Bereich, z. B. um eine Schwenkachse, schwenkbar ist und eine Auffächerung am diesem gemeinsamen Bereich, insbesondere der Schwenkachse, gegenüberliegenden Rand des Abdeckelements erfolgt. Die beiden Fächeraußenränder sind dabei jeweiligen geradlinig verlaufenden Rändern der abzudeckenden Öffnung zugeordnet, während der Behangrand, wo die Auffächerung erfolgt, durch entsprechenden Randverlauf an den Verlauf der Öffnung in diesem Bereich weitestgehend angepaßt ist. Aufgrund dieser Gestaltung ist die Verschlußeinrichtung an verschiedenartige Konturen oder Größen von Öffnungen angepaßt, so daß diese in der aufgefächerten Abdeckstellung des Abdeckelements im Wesentlichen vollständig abgedeckt werden können. Die Verschlußeinrichtung ist dabei außerordentlich einfach und kostengünstig und eröffnet damit vielfältige Einsatzmöglichkeiten für alle möglichen öffnungen, z.B. insbesondere auch solche von Fahrzeugen, und hierbei insbesondere solche von Kraftfahrzeugen. Gerade Öffnungen von Fahrzeugen, insbesondere Kraftfahrzeugen, haben je nachdem, an welcher Stelle sie sich befinden, die unterschiedlichsten, der Fahrzeuggestaltung folgenden Konturen und Größen, für die die Verschlußeinrichtung gemäß der Erfindung unter jeweiliger Anpassung daran geeignet ist. Die erfindungsgemäße Verschlußeinrichtung macht es nunmehr möglich, diese verschiedenartig konturierten und bemessenen Öffnungen abzudecken und damit z.B. bei Kraftfahrzeugen einen wirksamen Schutz gegen Aufheizung sowie einen Sichtschutz zu verwirklichen. Es versteht sich dabei, daß auch bei Fahrzeugen, insbesondere Kraftfahrzeugen, die verschiedensten dort vorhandenen Öffnungen mit einer erfindungsgemäßen Verschlußeinrichtung ausgestattet werden können, das heißt die Öffnungen im Bereich der Frontscheibe und/oder Heckscheibe sowie solche im Bereich der vorderen und/oder hinteren Seitenscheiben. Das mindestens eine Abdeckelement der erfindungsgemäßen Verschlußeinrichtung läßt sich mit seiner aufgefächerten Kontur an die Kontur der jeweiligen Öffnung in einfacher Weise anpassen, z.B. durch Zuschneiden. Das Abdeckelement ist in seiner zugefächerten, einen Stapel bildenden Freigabestellung ein schmales unauffälliges Bauteil, das in einer Aufnahme, z.B. der Aufnahme einer Leiste oder einem Schlitz innerhalb eines öffnungsrandes, z.B. eines Fensters, aufnehmbar ist.
Da für die Überführung des Abdeckelements in die aufgefächerte Abdeckstellung bzw. gegensinnig in die zugefächerte Freigabestellung im Wesentlichen nur eine Schwenkbewegung um eine einzige Achse notwendig ist, sind damit die Voraussetzungen dafür geschaffen, das Abdeckelement in einfacher Weise mittels einer geeigneten Antriebseinrichtung zu mechanisieren, insbesondere zu motorisieren, so daß die Bewegung zwischen der Abdeckstellung und der Freigabestellung motorisch durchführbar ist. Von Vorteil ist ferner, daß die Verschlußeinrichtung sich dank der einfachen Gestaltung und des einfachen Beweg.ungsablaufs besonders gut auch für eine nachträgliche Ausstattung von Fenstern, Türen od.dgl. öffnungen eignet und dabei einfach und kostengünstig ist.

Vorteilhafte weitere Erfindungsmerkmale und Ausgestaltungen ergeben sich aus den Unteransprüchen 2 bis 26.

Weitere Einzelheiten und Vorteile der Erfindung ergeben sich aus der nachfolgenden Beschreibung.

Der vollständige Wortlaut der Patentansprüche ist vorstehend allein zur Vermeidung unnötiger Wiederholungen nicht wiedergegeben, sondern statt dessen lediglich durch Nennung der Anspruchsnummern darauf Bezug genommen, wodurch jedoch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch die allein aus den Zeichnungen entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand von in den Zeichnungen gezeigten Ausführungsbeispielen näher erläutert. Es zeigen:
- Fig. 1: eine schematische Seitenansicht einer Verschlußeinrichtung für Fenster, Türen od.dgl. Öffnungen gemäß einem ersten Ausführungsbeispiel in einer Abdeckstellung mit im wesentlichen vollständiger Abdeckung einer Öffnung,
- Fig. 2: eine schematische Seitenansicht der Verschlußeinrichtung in Fig. 1 in ihrer nicht wirksamen Stellung,
- Fig. 3: einen schematischen Schnitt entlang der Linie III-III in Fig. 2,
- Fig. 4: eine Seitenansicht einer vergrößerten Einzelheit IV in Fig. 2,
- Fig. 5: eine schematische Seitenansicht etwa entsprechend derjenigen in Fig. 1 einer Verschlußeinrichtung gemäß einem zweiten Ausführugsbeispiel in ihrer Abdeckstellung,
- Fig. 6: eine schematische Seitenansicht etwa entsprechend derjenigen in Fig. 2 der Verschlußeinrichtung gemäß dem zweiten Ausführungsbeispiel in ihrer nicht wirksamen Stellung,
- Fig. 7 bis 15: jeweils eine schematische Seitenansicht etwa entsprechend derjenigen in Fig. 1 einer Verschlußeinrichtung gemäß einem dritten bzw. vierten bzw. fünften bzw. sechsten bzw. siebten bzw. achten bzw. neunten bzw. zehnten bzw. elften Ausführungsbeispiel.

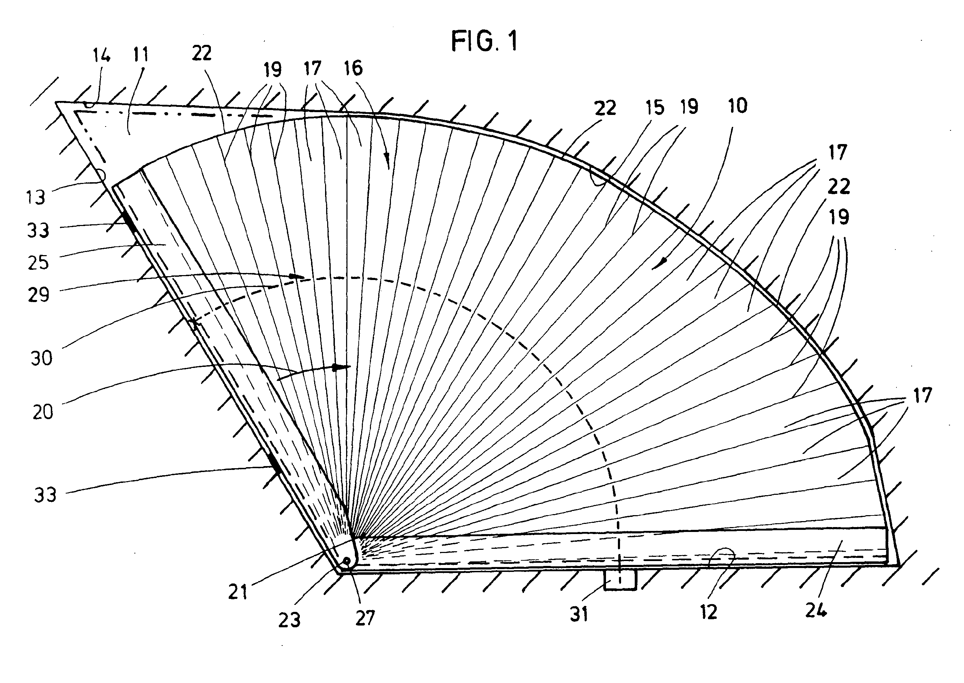

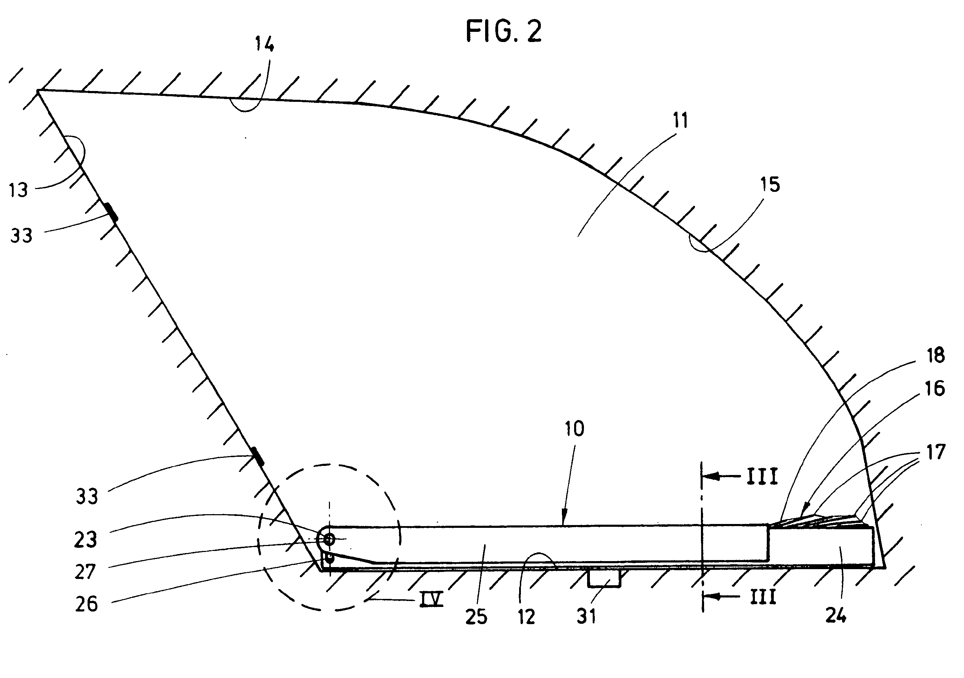

In Fig. 1 bis 4 ist eine Verschlußeinrichtung 10 für Fenster-, Türen- od. dgl. Öffnungen 11 gezeigt, die sich in Fig. 1 in ihrer Abdeckstellung befindet, in der die Öffnung 11 im Wesentlichen vollständig abgedeckt ist, und die sich bei der Darstellung in Fig. 2 in ihrer nicht wirksamen Freigabestellung befindet, in der die Öffnung 11 im Wesentlichen gänzlich freigegeben ist. Bei der öffnung 11 handelt es sich um eine beliebige Öffnung, z.B. eine Fensteröffnung, Türöffnung und hierbei z.B. um eine solche eines Fahrzeugfensters, das aus einem vorderen oder hinteren oder seitlichen Fenster des Fahrzeugs bestehen kann. Die Öffnung 11 kann z.B. diejenige eines seitlichen Fensters eines Fahrzeugs, insbesondere eines Kraftfahrzeugs, sein, die z.B. mittels einer im Wesentlichen in vertikaler Richtung auf- und abfahrbaren Scheibe verschließbar ist. Die öffnung 11 wird in Fig. 1 und 2 unten durch einen unteren Rand 12, links durch einen seitlichen Rand 13, oben durch einen oberen Rand 14 und rechts davon durch einen bogenförmig verlaufenden rechten Rand 15 begrenzt, wobei alle Ränder 12 bis 15 oder einige dieser von einem hier nicht weiter dargestellten Rahmenteil gebildet sein können.

Fig. 1 und 2 zeigen, daß der untere Rand 12 bei diesem Beispiel etwa horizontal verläuft, was jedoch nicht zwingend ist, und daß der seitliche Rand 13 in Bezug auf den Rand 12 unter einem stumpfen Winkel, der größer als 90° ist, verläuft. Der obere Rand 14 verläuft zum unteren Rand 12 z. B. parallel oder stattdessen nicht parallel und hat ferner in Bezug auf den unteren Rand 12 einen Relativversatz in Fig. 1 und 2 nach links hin. Im übrigen ist der obere Rand 14 z.B. kürzer als der untere Rand 12 bemessen. Der bogenförmige Rand 15 verbindet den Rand 14 mit dem unteren Rand 12, wobei der Bogenverlauf bis hin zum Rand 12 durchgehend sein kann oder auch durch ein oder mehrere kürzere geradlinige Verläuft zusammengesetzt sein kann. Eine so gestaltete Öffnung 11 ist z.B. typisch für einige vordere Kraftfahrzeug-Seitenfenster.

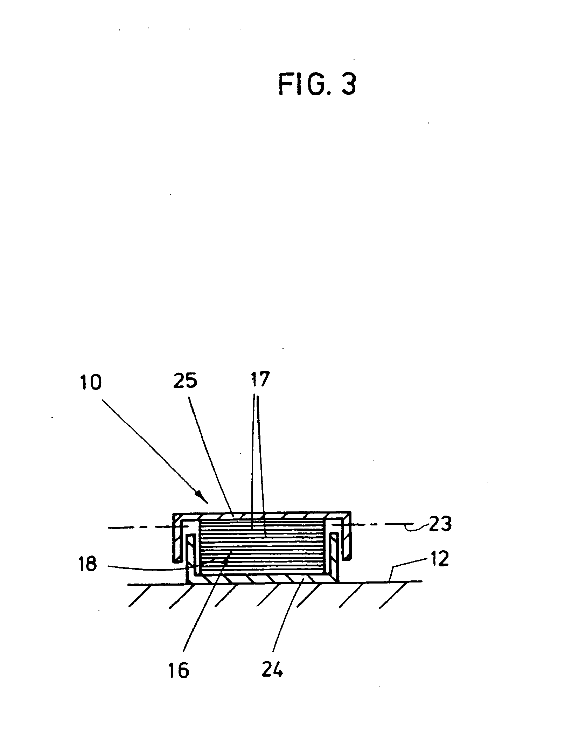

Die Verschlußeinrichtung 10, die in ihrer Abdeckstellung gemäß Fig. 1 die beschriebene öffnung 11 im Wesentlichen vollständig abdecken kann, weist mindestens ein Abdeckelement 16 auf, das einzelne bewegliche auf- und zufächerbare Elementteile 17 aufweist, die im in Fig. 1 dargestellten aufgefächerten Zustand, der der Abdeckstellung entspricht, einen etwa flächigen Verschluß der öffnung 11 bilden und die im in Fig. 2 gezeigten zugefächerten Zustand einen Stapel 18 bilden, in dem die einzelnen Elementteile 17 z.B. in horizontaler Ausrichtung und zueinander etwa parallel verlaufend übereinander gestapelt sind (Fig. 3). Fig. 3 zeigt auch, daß die Elementteile 17 jeweils alle die gleiche Breite haben.

Das mindestens eine Abdeckelement 16 ist hinsichtlich seiner möglichen Auffächerung (Fig. 1) und hinsichtlich seiner Randkontur, die sich im aufgefächerten Zustand der Elementteile 17 ergibt (Fig. 1), an den jeweiligen Randverlauf der jeweiligen Öffnung, in Fig. 1 und 2 an den Randverlauf 12 bis 15 der gezeigten öffnung 11, derart angepaßt, daß diese öffnung 11 in der Abdeckstellung (Fig. 1) im Wesentlichen völlig abgedeckt ist.

Beim gezeigten Ausführungsbeispiel ist das mindestens eine Abdeckelement 16 aus einem plissierten Behang gebildet, dessen Elementteile 17 aus klappbar verbundenen Streifenteilen dieses Behanges gebildet sind, die z. B. um etwa parallele Achsen 19 und/oder unparallele Achsen etwa ziehharmonikaartig gelenkig verbunden sind, wobei die einzelnen Elementteile 17 z.B. jeweils gleich breit bemessen sind (Fig. 3). Das mindestens eine Abdeckelement 16,z.B. in Form eines plissierten Behanges, besteht z.B. aus Stoff oder Kunststoff. Stattdessen kann das Abdeckelement 16 auch metallische Elementteile 17 aufweisen, die im Bereich der jeweiligen Achsen 19 und angrenzenden Ränder gelenkig miteinander verbunden sind. Bei der Ausbildung des Abdeckelements 16 aus einem plissierten Behang,z.B. aus Stoff und/oder Kunststoffe, wird ein Material gewählt, das eine ausreichende Biegesteifigkeit in sich aufweist, so daß das Abdeckelement 16 im aufgefächerten Zustand (Fig. 1) einen im Wesentlichen biege- und knicksteifen Fächerbehang bildet.

Das mindestens eine Abdeckelement 16 ist an die besondere Form der Öffnung 11 in der Weise angepaßt, daß das Abdeckelement zur Herbeiführung der Abdeckstellung (Fig. 1) so weit auffächerbar ist, daß die Öffnung 11 im Wesentlichen vollständig abgedeckt ist. Ferner ist das Abdeckelement 16 hinsichtlich der Randkontur, die sich im aufgefächerten Zustand (Fig. 1) ergibt, an den Randverlauf der Öffnung 11, hierbei insbesondere an den Verlauf der Ränder 14, 15, so angepaßt, daß die Öffnung 11 in der Abdeckstellung im Wesentlichen vollständig abgedeckt ist und daß das Abdeckelement 16 zur Herbeiführung der Freigabestellung (Fig. 2) störungsfrei und zuverlässig reproduzierbar in den zugefächerten Zustand überführbar ist, ohne z. B. am Rand 15 oder 14 oder an anderer Stelle anzustoßen. In Fig. 1 ist mittels eines Pfeiles 20 angedeutet, daß das Abdeckelement 16 im Uhrzeigersinn aus der Abdeckstellung gemäß Fig. 1 in die zugefächerte und die Öffnung 11 freigebende Stellung gemäß Fig. 2 schwenkbar und zufächerbar ist. Befindet sich das Abdeckelement 16 in der Freigabestellung gemäß Fig. 2, ist durch im Wesentlichen Schwenkbewegung gegensinnig zur Pfeilrichtung 20, somit im Gegenuhrzeigersinn, das Abdeckelement 16 auffächerbar und in die Abdeckstellung (Fig. 1) überführbar.

Zumindest eine wesentliche Anzahl der Elementteile 17, beim ersten Ausführungsbeispiel in Fig. 1 bis 4 alle Elementteile 17, sind mit ihrem in Fig. 2 nach links und zum Rand 13 gerichteten einen Ende in einem gemeinsamen Bereich 21 zusammengefaßt, was sich bei der Ausbildung des Abdeckelements 16 als plissierten Behang durch den dortigen Randverlauf an diesem Behangrand ergibt, der dem dem Rand 14, 15 zugeordneten Behangrand 22 gegenüberliegt.

Bei einem anderen, nicht gezeigten Ausführungsbeispiel können die Elementteile 17 des Abdeckelements 16 im gemeinsamen Bereich 21 auch zusammengehalten sein, was z. B. dann verwirklicht ist, wenn das Abdeckelement 16 üblich einem Handfächer ausgebildet ist. In dem einen sowie in dem anderen Fall erfolgt die Auffächerung des Abdeckelements 16 im Bereich des gegenüberliegenden Endes der Elementteile 17 und somit im Bereich des dortigen Behangrandes 22. Der gemeinsame Bereich 21 enthält beim ersten Ausführungsbeispiel gemäß Fig. 1 bis 4 eine Schwenkachse 23 bzw. kann dieser durch diese Schwenkachse 23 gebildet sein. Die Schwenkachse 23 verläuft zum aufgefächerten Abdeckelement 16 (Fig. 1) im Wesentlichen rechtwinklig. Bei der Ausbildung des Abdeckelements 16 als plissierten Behang mit etwa ziehharmonikaartig miteinander gelenkig verbundenen Elementteilen 17 verläuft die Schwenkachse 23 außerdem - im zugefächerten Stapelzustand der Elementteile 17 betrachtet - im Wesentlichen parallel zu den einzelnen Elementteilen 17 (Fig. 2,3).

Das mindestens eine Abdeckelement 16 weist zwei Randteile 24 und 25 auf, die im aufgefächerten Zustand (Fig. 1) unter einem Winkel von größer 90° zueinander verlaufen und im gemeinsamen Bereich 21 zusammengeführt sind und dort miteinander um die Schwenkachse 23 schwenkbar verbunden sind. Die Randteile 24 und 25 können je nach Größe und Gestalt der Öffnung 11 im aufgefächerten Zustand des mindestens einen Abdeckelements 16 stattdessen auch nur unter einem Winkel von 90° oder kleiner 90° zueinander verlaufen, was von den Gegebenheiten und den Abmessungen des fächerförmigen Abdeckelements 16 abhängig ist.

Beim gezeigten Ausführungsbeispiel bestehen die Randteile 24, 25 aus Leisten, insbesondere aus U-Profilen, wobei die U-Profile mit ihren öffnungen einander zugewandt sind und im Stapelzustand (Fig. 2, Fig. 3) einander übergreifen können, wobei der Stapel 18 dann im Inneren dieser so gestalteten Randteile 24, 25 lagert, wie Fig. 3 erkennen läßt. Die Anordnung ist dabei so getroffen, daß die Randteile 24, 25 im zugefächerten Stapelzustand (Fig. 2, Fig.3) im Wesentlichen parallel zueinander verlaufen. Bei einem anderen, nicht gezeigten Ausführungsbeispiel, können die Randteile 24, 25 im zugefächerten Stapelzustand stattdessen aber auch unter einem Winkel, z.B. spitzen Winkel, zueinander verlaufen.

Die Länge der Elementteile 17, insbesondere Streifenteile eines plissierten Behanges, des mindestens einen Abdeckelements 16 kann auf dem Zwischenbereich zwischen den Randteilen 24 und 25 unverändert gleich sein, wobei sich dann eine Gestaltung ähnlich einem Handfächer ergibt. Zusätzlich dazu oder stattdessen kann die Länge der Elementteile 17 auch variieren. Beim ersten Ausführungsbeispiel in Fig. 1 bis 4 nimmt z.B. die Länge der einzelnen Elementteile 17 betrachtet gegensinnig zum Pfeil 20 und ausgehend vom Randteil 24 ab. Die dem Randteil 24 nahen Elementteile 17 haben eine größere Länge als die anderen, dem Randteil 25 nahen Elementteile 17, wobei die Elementteile 17, die sich dazwischen befinden, gegensinnig zum Pfeil 20 in ihrer Länge abnehmen. Die Längengestaltung der einzelnen Elementteile 17 hängt vom Randverlauf und der Größe der Öffnung 11 ab und ist daran so angepaßt, daß in der aufgefächerten Abdeckstellung die Öffnung 11 im Wesentlichen vollständig abgedeckt ist.

Das Abdeckelement 16,insbesondere in Gestalt eines plissierten Behanges,ist mit dem in Fig. 1 unteren Rand oder dort letzten Elementteil 17 am Randteil 24 befestigt, z.B. bei Gestaltung dieses als U-Profil in das U-Profil hineingelegt und an der Profilbasis des U-Profils befestigt, z. B. durch Kleben, Schrauben, Klemmen od.dgl.. In analoger Weise ist der andere Rand des Abdeckelements 16, der in Fig. 1 dem Rand 13 der Öffnung 11 zugeordnet ist, am Randteil 25 fest angebracht. Eine Relativschwenkung der Randteile 24, 25 um die Schwenkachse 23 bewirkt somit das Auffächern bzw. Zufächern des Abdeckelements 16 in die Abdeckstellung gemäß Fig. 1 bzw. Freigabestellung gemäß Fig. 2.

Bei einem anderen, nicht gezeigten Ausführungsbeispiel sind die Randteile 24, 25 aus biegesteifen Elementteilen 17, z. B. Streifenteilen, des Abdeckelements 16 gebildet. Bei einem anderen Ausführungsbeispiel dienen als Randteile 24, 25 Leisten, z.B. im Querschnitt flache oder winkelförmige oder runde Leisten.

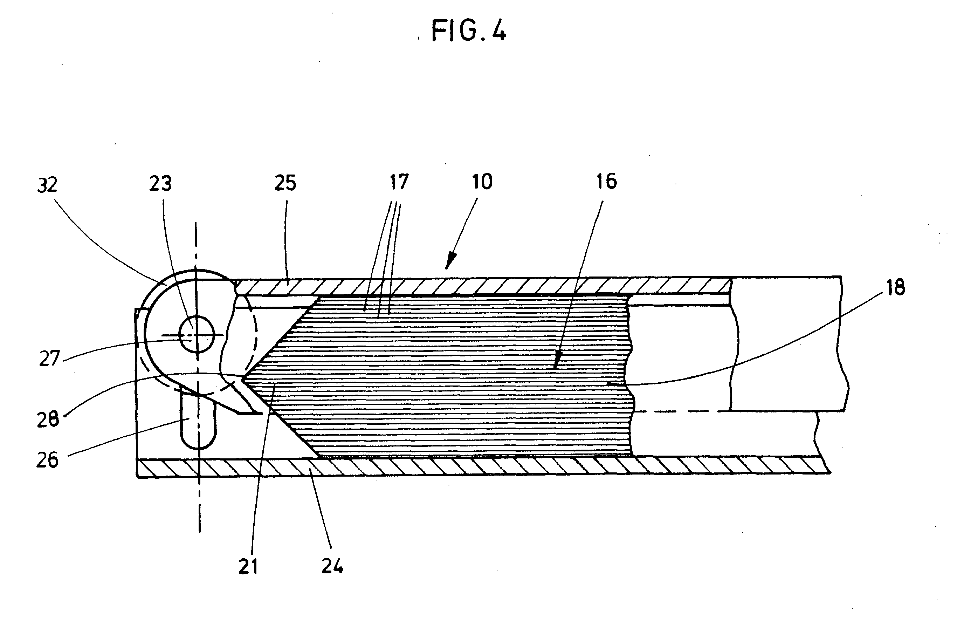

Die beiden Randteile 24 und 25 sind im gemeinsamen Bereich 21,und hierbei quer zum Verlauf der Schwenkachse 23 betrachtet,verschieblich verbunden. Hierzu weist ein Randteil, z. B. der in Fig. 1 untere Randteil 24, ein Langloch 26 auf, wobei der andere Randteil 25 mit diesem einen Randteil 24 mittels eines das Langloch 26 durchsetzenden Bolzens 27 schwenkbar verbunden ist. Wie Fig. 2 und 4 zeigen, verläuft das Langloch 26 quer zum Längsverlauf des Randteiles 24, und hierbei zumindest im Wesentlichen dazu unter einem Winkel von 90°. Dies ist jedoch nicht zwingend. Abweichend davon kann die Längsmittelachse des Langloches 26 auch unter einem Winkel kleiner oder größer 90° in Bezug auf den Längsverlauf des Randteiles 24 verlaufen. Aufgrund dieser querverschieblichen Verbindung der Randteile 24, 25 ist in einfacher Weise erreicht, daß die Randteile 24, 25 im Stapelzustand (Fig. 2 bis 4) im Wesentlichen parallel zueinander verlaufen.

Die Randteile 24, 25 können gleich lang bemessen sein. Beim gezeigten ersten Ausführungsbeispiel hingegen haben die Randteile 24, 25 unterschiedliche Längen, wobei hier der in Fig. 1 untere Randteil 24 eine größere Länge aufweist als der andere Randteil 25. Bei dieser Gestaltung ist das Abdeckelement 16 in der Weise gegensinnig zum Pfeil 20 auffächerbar, daß der kürzere Randteil 25 relativ zum längeren Randteil 24, der am Rand 12 der Öffnung 11 festgehalten ist, bewegbar, insbesondere um die Schwenkachse 23 schwenkbar, ist.

Wie insbesondere aus Fig. 4 ersichtlich ist, sind die den plissierten Behang als Abdeckelement 16 bildenden Elementteile 17, insbesondere Streifenteile, im gemeinsamen Bereich 21 an ihrem dortigen Ende unterschiedlich lang bemessen, bevorzugt so, daß der Stapel 18 etwa entsprechend einem liegenden V nach außen, und zwar in Fig. 4 nach links hin, zugespitzt ist, wie durch die dort sichtbare Spitze 28 verdeutlicht ist. Dadurch ergibt sich eine einwandfreie und reproduzierbare Auffächerung beim Auffächern in die Abdeckstellung (Fig. 1) und Zufächerung zum Stapel in der Freigabestellung (Fig. 2 bis 4).

Eine weitere, wesentliche Besonderheit der Verschlußeinrichtung 10 liegt darin, daß mindestens eine Führungseinrichtung 29 vorgesehen ist, die sich zwischen den Randteilen 24, 25 erstreckt und mit dem mindestens einen Abdeckelement 16 beweglich verbunden ist. Diese Führungseinrichtung 29 weist z. B. mindestens ein Führungsseil 30 auf, das sich - im aufgefächerten Zustand gemäß Fig. 1 betrachtet - im Wesentlichen bogenförmig um den gemeinsamen Bereich 21, insbesondere die Schwenkachse 23, erstreckt. Das Führungsseil 30 ist z. B. in der Weise mit dem Abdeckelement 16 beweglich verbunden, daß die Elementteile 17 nicht weiter gezeigte Durchlässe aufweisen, durch die das Führungsseil 30 hindurchgeführt ist. Das Führungsseil 30 ist mit einem Ende z.B. am Randteil 25 befestigt. Das andere Ende des Führungsseiles 30 kann je nach Gestaltung am anderen Randteil 24 befestigt sein. Die Führungseinrichtung 29 kann ferner an irgend-
einer Stelle entweder im Verlauf des Führungsseiles 30 selbst oder an einem der Randteile 24, 25 eine Speichereinrichtung aufweisen, z. B. eine Federeinrichtung, einen Federmotor od. dgl., die in der Lage ist, beim Zufächern des Abdeckelements 16 das Führungsseil 30 aufzunehmen und beim Auffächern des Abdeckelements gegen Federkraft freizugeben, so daß dann das Führungsseil 30 beim Auffächern immer unter einer gewissen Vorspannung steht.

In besonders vorteilhafter Gestaltung kann das Führungsseil 30 Teil einer nur schematisch angedeuteten Antriebseinrichtung 31 sein, mittels der je nach Anordnung das Abdeckelement 16 in den aufgefächerten Zustand und/oder in seinen Stapelzustand überführbar ist. In diesem Fall greift am Führungsseil 30 ein nicht weiter sichtbarer Antrieb der Antriebseinrichtung 31, z. B. ein Federantrieb, ein Antriebsmotor od. dgl., an. Die Antriebseinrichtung 31 kann am Randteil 24 und hierbei z. B. auf der dem Abdeckelement 16 abgewandten Seite des Randteiles 24 und/oder am Rand 12 der Öffnung 11, dort z. B. in einer geeigneten Aufnahme, angeordnet sein. Die Antriebseinrichtung 31 kann z. B. einen elektrisch angetriebenen Wickelantrieb für das Führungsseil 30 aufweisen, so daß bei Einschalten der Antriebseinrichtung 31 durch das Aufwickeln des Führungsseiles 30 ein Zug auf den Randteil 25 ausgeübt wird und dadurch das Abdeckelement 16 motorisch in die zugefächerte Freigabestellung (Fig. 2 bis 4) überführbar ist. Im Kraftverlauf zwischen dem Randteil 25 und dem Antriebsmotor der Antriebseinrichtung 31 kann ferner ein federndes Element angeordnet sein, welches beim Aufwickeln des Führungsseiles 30 gespannt wird und in der erreichten zugefächerten Stapelstellung (Fig. 2 bis 4) gespannt bleibt, so daß z. B. bei Freigabe des Wickelantriebes der Randteil 25 gegensinnig zum Pfeil 20 bewegt wird und das Führungsseil 30 abgezogen wird, so daß unter der Wirkung der sich entspannenden Feder das Abdeckelement 16 selbsttätig in die aufgefächerte Abdeckstellung gemäß Fig. 1 überführt wird. Ein entsprechendes Federelement kann z. B. als Schenkelfeder ausgebildet und im Bereich der Schwenkachse 23 angeordnet und zwischen beiden Randteilen 24, 25 wirksam sein. Bei einem anderen, nicht gezeigten Ausführungsbeispiel kann eine zum Führungsseil 30 etwa parallel verlaufende Feder vorgesehen sein, die z.B. vom Führungsseil 30 durchzogen ist und die sich mit einem Ende am Randteil 24 und mit dem anderen Ende am Randteil 25 abstützt. Diese Feder kann z. B. als zylindrische Schraubenfeder ausgebildet sein, die beim motorischen Überführen der Verschlußeinrichtung 10 in die Freigabestellung zusammengedrückt wird.
Auch andere Gestaltungen, die einen motorischen Antrieb der Verschlußeinrichtung 10 zur Bewegung zwischen der aufgefächerten Abdeckstellung und der zugefächerten Freigabestellung ermöglichen, liegen im Rahmen der Erfindung, z. B. auch ein Drehantrieb, der etwa im Bereich der Schwenkachse 23 zwischen beiden Randteilen 24, 25 im Sinne einer Schwenkbetätigung in Pfeilrichtung 20 bzw. gegensinnig dazu wirksam ist. Eine solche Antriebseinrichtung ist lediglich in Fig. 4 schematisch mit 32 angedeutet. Diese Antriebseinrichtung kann als Drehantrieb oder als Translationsantrieb gestaltet sein.

In Fig. 1 und 2 ist ferner angedeutet, daß der Randteil 25 im Bereich des Randes 13 lösbar halterbar ist. Hierzu können zwischen dem Rand 13 und dem Randteil 25 wirksame, in Fig. 1 und 2 nur schematisch angedeutete Haltemittel 33, z. B. in Form von Magnethaltern, vorgesehen sein.

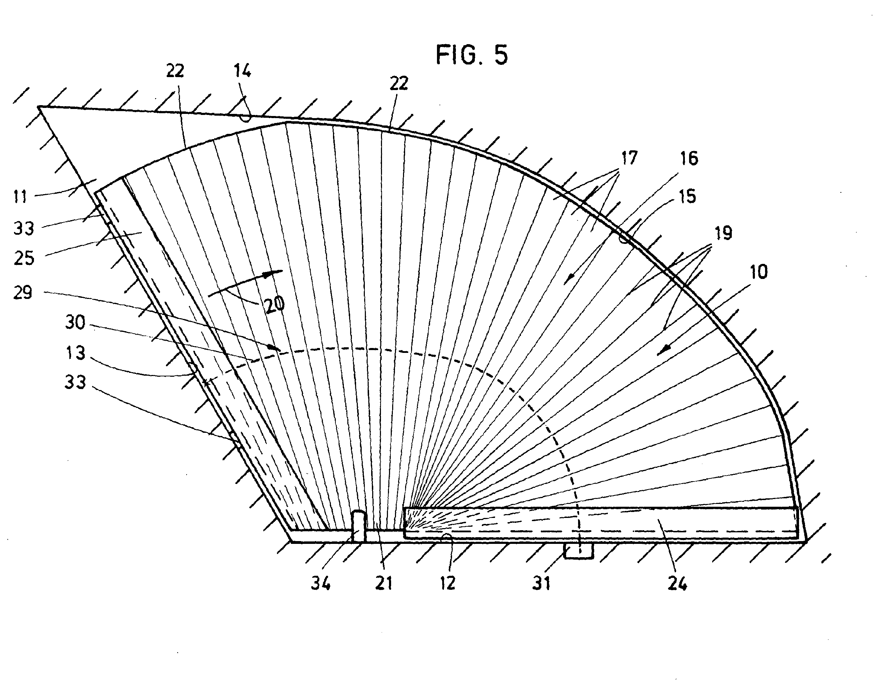

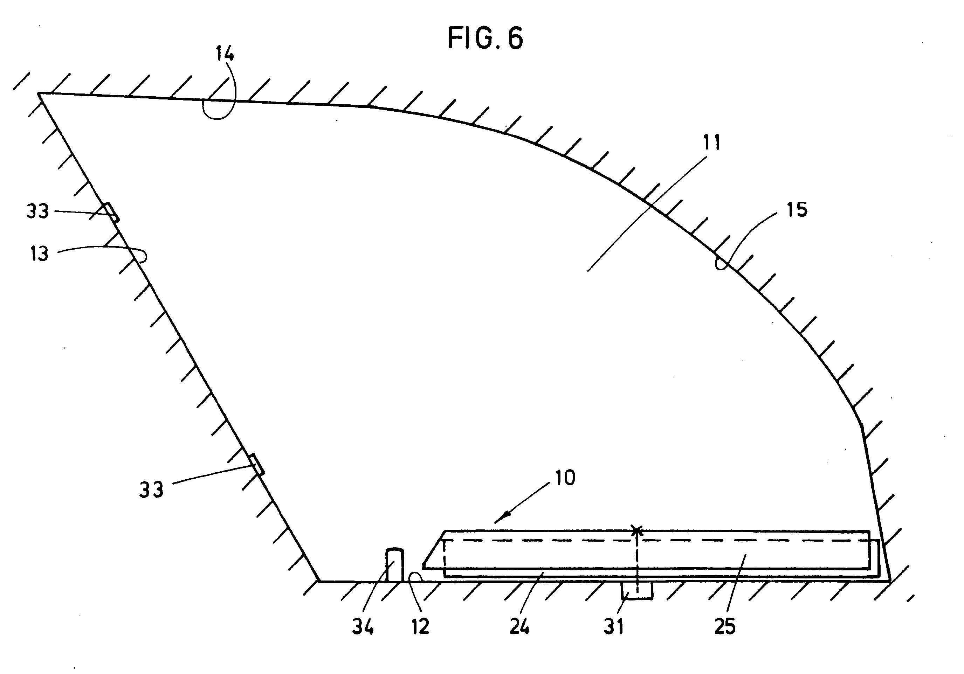

Bei dem in Fig. 5 und 6 gezeigten zweiten Ausführungsbeispiel sind für die Teile, die dem ersten Ausführungsbeispiel in Fig. 1 bis 4 entsprechen, gleiche Bezugszeichen verwendet, so daß dadurch auf die Beschreibung des ersten Ausführungsbeispiels Bezug genommen ist.

Das zweite Ausführungsbeispiel unterscheidet sich vom ersten dadurch, daß die Randteile 24 und 25 nicht mittels eines Bolzens 27 und eines Langloches 26 im Bereich einer Schwenkachse 23 schwenkbar verbunden sind, sondern stattdessen miteinander nicht verbundene Bauteile darstellen, deren Verbindung allein durch den gemeinsamen Bereich 21 und über das Abdeckelement 16 erfolgt. Zur Herbeiführung der aufgefächerten Abdeckstellung wird das Abdeckelement 16 gegensinnig zum Pfeil 20 aufgefächert und im Verlauf der Auffächerung der Randteil 25 auch mit seinem dem Rand 12 zugewandten Ende vom anderen Randteil 24 weg und in Fig.5 nach links hin bewegt. Hierbei kann mit Vorteil einem hochragenden Sperrzapfen 34 am unteren Rand 12 einer Fahrzeugtür Rechnung getragen werden, der aufgrund dieser Ausbildung der Betätigung der Verschlußeinrichtung 10 nicht störend im Wege ist. Auch diese Verschlußeinrichtung 10 gemäß dem zweiten Ausführungsbeispiel kann in entsprechender Weise wie diejenige des ersten Ausführungsbeispieles motorisch mittels einer Antriebseinrichtung 31, 32 in die aufgefächerte Abdeckstellung und/oder zugefächerte Freigabestellung gebracht werden.

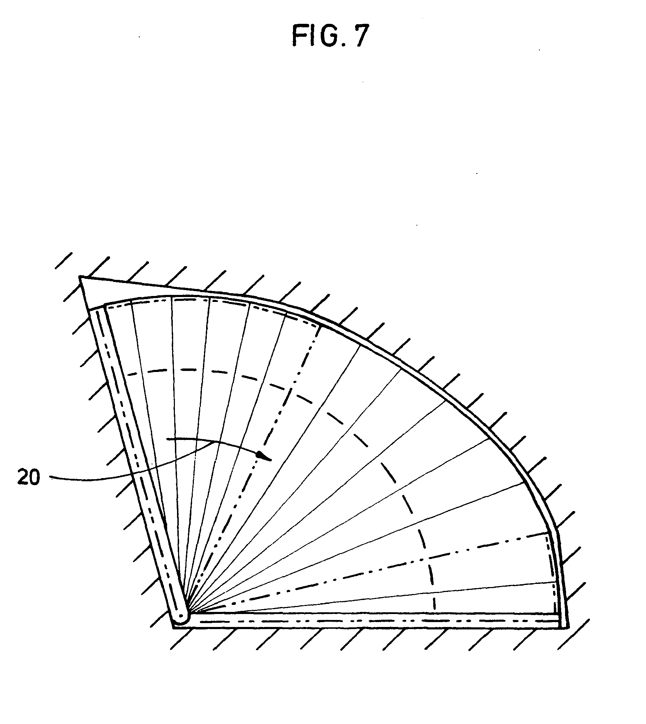

Bei den weiteren Ausführungsbeispielen in Fig. 7 bis 13 sind unterschiedlich gestaltete Öffnungen und jeweils daran angepaßte Verschlußeinrichtungen schematisch gezeigt, die hinsichtlich der Gestaltung dem ersten Ausführungsbeispiel entsprechen, wobei das jeweilige Abdeckelement hinsichtlich seiner möglichen Auffächerung und hinsichtlich seiner Randkontur, die sich im aufgefächerten Zustand der Elementteile ergibt, an den jeweiligen Randverlauf der jeweiligen, unterschiedlich gestalteten Öffnung immer derart angepaßt ist, daß die jeweilige Öffnung im Wesentlichen vollständig abgedeckt wird. Bei all diesen Ausführungsbeispielen in Fig. 7 bis 13 ist wie beim ersten und zweiten Ausführungsbeispiel das Abdeckelement immer in der Weise auffächerbar, daß der jeweils kürzere Randteil relativ zum festgehaltenen längeren Randteil bewegbar, insbesondere schwenkbar ist, was jeweils durch Pfeile 20 symbolisiert ist, die jeweils die Bewegungsrichtung von der aufgefächerten Abdeckstellung in die zugefächerte Freigabestellung angeben, wobei die Überführung von der zugefächerten Freigabestellung in die aufgefächerte Abdeckstellung gegensinnig dazu geschieht.

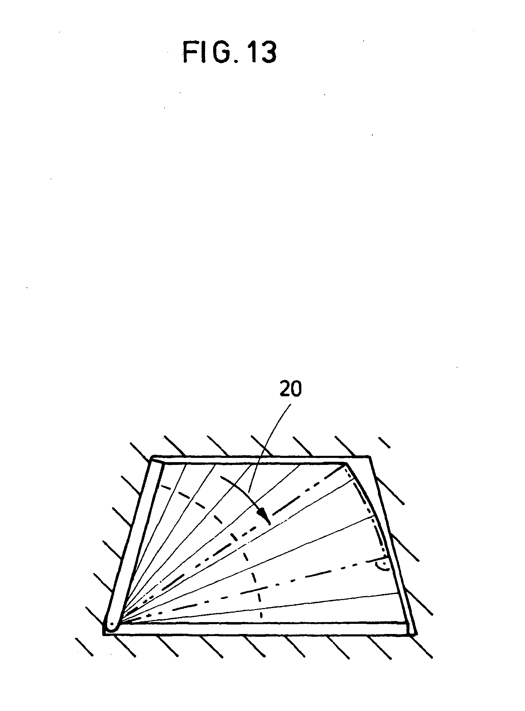

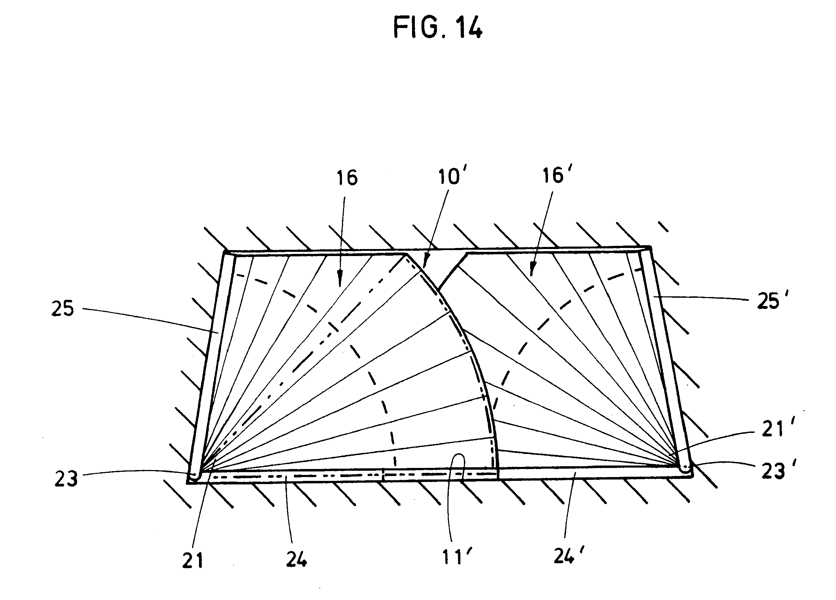

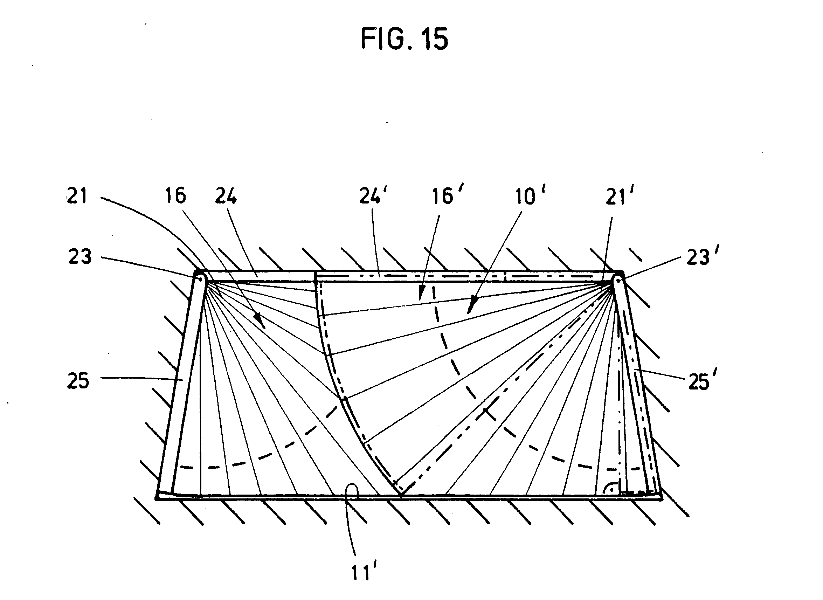

Beim zehnten Ausführungsbeispiel in Fig. 14 und elften Ausführungsbeispiel in Fig. 15 ist jeweils eine Öffnung 11' etwa ähnlich der in Fig. 13 gezeigten Öffnung dargestellt, die z. B. im Frontscheiben-oder Heckscheibenbereich eines Fahrzeuges in ähnlicher Form anzutreffen ist. Die VerschluBeinrichtung 10' weist in Anpassung an diese Öffnung 11' mehrere, z. B. wie dargestellt zwei, eigenständige Abdeckelemente 16 und 16' auf, die nebeneinander angeordnet sind und unter teilweiser Überlappung im dargestellten, aufgefächerten Zustand zusammen die Öffnung 11' im Wesentlichen völlig abdecken. In beiden Fällen gemäß Fig. 14 und 15 verläuft je Abdeckelement 16 und 16' deren jeweiliger gemeinsamer Bereich 21 bzw. 21', insbesondere jeweilige Schwenkachse 23, 23', etwa auf einer Linie, jedoch entlang dieser Linie mit Abstand voneinander. Beim Ausführungsbeispiel in Fig. 14 liegt diese Linie unten, hingegen beim Ausführungsbeispiel in Fig. 15 oben. Betrachtet man die Anordnung allein hinsichtlich der Schwenkachsen, so befinden sich beim Ausführungsbeispiel in Fig. 14 die Schwenkachsen 23 und 23' im linken bzw. rechten unteren Eckbereich der Öffnung 11', während sie sich beim anderen Ausführungsbeispiel in Fig. 15 im linken bzw. rechten oberen Eckbereich der Öffnung 11' befinden.

Im dargestellten aufgefächerten Zustand, der der Abdeckstellung entspricht, verlaufen die jeweils einen Randteile 24, 24' auf einer Linie, in Fig. 14 auf einer unten und in Fig. 15 auf einer oben verlaufenden Linie, wobei sich diese Randteile 24, 24' in Richtung ihrer Längserstreckung überdecken können. Die anderen Randteile 25, 25' sind etwa entsprechend U-Schenkeln dazu ausgerichtet.

Fig. 14 und 15 zeigen, daß auch derart gestaltete Öffnungen 11', die z.B. etwa trapezförmig sind und auch größere Ausmaße haben können, mittels einer solchen angepaßten Verschlußeinrichtung 10', die zumindest zwei eigenständige Abdeckelemente 16, 16' aufweist, im Sinne einer Abdeckung bzw. Freigabe beherrschbar sind.

Bei allen Ausführungsbeispielen der Verschlußeinrichtung 10, 10' ist vorgesehen, daß jeder Elementteil 17, insbesondere Streifenteil, ausgehend vom kürzeren Randteil 25, 25' hin zum längeren Randteil 24, 24' eine solche Länge besitzt, die kleiner oder höchstens gleich der Länge des direkt benachbarten, nächstfolgenden und näher beim längeren Randteil 24, 24' gelegenen Elementteils 17, insbesondere Streifenteils, ist.

Das in Fig.1 gezeigte Abdeckelement 16 weist im Bereich des kurzen Randteiles 25 Elementteile 17 auf, die im Wesentlichen die Länge des Randteiles 25 besitzen und einen Kreisausschnitt bilden, der direkt an das Randteil 25 grenzt. Da das Randteil 25 als starres Element ausgebildet ist, darf die Länge des Randteiles 25 höchstens so groß bemessen sein, daß das Randteil 25 um die zugeordnete Schwenkachse 23 verschwenkbar ist, ohne an den Rändern 14,15 der Öffnung 11 anzustoßen oder gar zwischen den Rändern 14,15 und der Schwenkachse 23 eingeklemmt zu werden. Ausgehend von dieser Ausgestaltung des Abdeckelementes 16 verbleibt in Fig.1 im linken, oberen Eck der Öffnung 11 ein etwa dreieckförmiger Bereich, welcher in der zugefächerten Abdeckstellung des Abdeckelementes 16 nicht abgedeckt wird. In einer vorteilhaften Ausführungsform der Erfindung werden die Elementteile 17, welche in Fig.1 dem Bereich des Randteiles 25 zugeordnet sind und einen Kreisausschnitt bilden, so beschnitten, daß das Abdeckelement 16 im Bereich des linken, oberen Ecks der Öffnung 11 einen Randverlauf besitzt, welcher der gestrichelten Linie in Fig.1 folgt. Das Randteil 25 behält dagegen nach wie vor seine gezeigte Länge, die gleichzeitig seine maximale Länge ist. Damit ist eine Ausführungsform der Erfindung gegeben, in welcher bei maximal möglicher Länge des kurzen Randteiles 25 die direkt benachbarten Elementteile 17 eine Länge besitzen, welche die Länge des Randteiles 25 erheblich übersteigt. Dabei ist die Länge der Elementteile 17, welche den in Fig.1 gestrichelten Dreiecksbereich abdecken, so bemessen, daß diese Länge vom längsten der Elementteile 17 bis hin zu dem Elementteil, das etwa die Länge des kurzen Randteiles 25 besitzt, kontinuierlich abnimmt. Das längste dieser Elementteile grenzt direkt an das kurze Randteil 25. Da das Abdeckelement 16 der Verschlußeinrichtung 10 aus flexiblem Material besteht, paßt sich der in Fig.1 gestrichelt dargestellte Bereich des Abdeckelementes 16, wo nötig, beim Auffächern und Zufächern der Verschlußeinrichtung 10 durch kurzzeitiges Umknicken an den Verlauf der Öffnungsränder 14,15 an. Das kurzzeitige Umknicken der entsprechenden Elementteile 17 des Abdeckelementes 16 erfolgt dadurch, daß die im gestrichelt gezeigten Bereich des Abdeckelementes 16 liegenden Elementteile 17 bei der Bewegung des Abdeckelementes 16 von der Abdeckstellung in die Freigabestellung über eine kurze Strecke am oberen Rand 14, 15 mit ihrem oberen Ende anstoßen und durch die Schwenkbewegung des kurzen Randteiles 25 gestapelt und gleichzeitig um eine zur Schwenkachse 23 etwa parallele Achse verschwenkt werden. Der bei der SChwenkbewegung des kurzen Randteiles 25 um die SChwenkachse 23 zwischen der oberen Randkante des Randteiles 25 und den Rändern 14,15 entstehende kleinste Spalt muß dabei größer sein als die Höhe des Stapels aus Elementteilen 17, welcher durch kurzzeitiges Umknicken der Elementteile 17 entsteht, welche den gestrichelten Bereich in Fig.1 bilden.
Natürlich können sämtliche nicht vom Abdeckelement 16 abgedeckten Bereiche in Fig.5 und in Fig.7 - Fig.15 abgedeckt werden, indem die Verschlußeinrichtung 10 in der vorstehend beschriebenen Art ausgestaltet wird.

In einer weiteren vorteilhaften Ausführungsform der Erfindung besitzen bei maximaler Länge des langen Randteiles 24 die direkt benachbarten Elementteile 17 eine Länge, welche die Länge des Randteiles 24 übersteigt. Dies ist bei all den Verschlußeinrichtungen 10 der Fall, welche an solche Fensterformen angepaßt sind, deren unterer Öffnungsrand 12 mit dem etwa bogenförmigen Rand 15 einen stumpfen Winkel einschließt. Befindet sich ein derart ausgebildetes Abdeckelement 16 im Stapelzustand und damit in der Freigabestellung, passen sich die über den langen Randteil 24 überstehenden Elementteile 17 aufgrund ihrer Flexibilität an den Randverlauf der zugeordneten Öffnung problemlos an. Das Abdeckelement 16 kann dabei in Fig.1,Fig.5 sowie in Fig.7 - Fig.15 so ausgebildet werden, daß die in diesen Figuren dargestellten nicht abgedeckten Bereiche der Öffnung 11 vollständig oder auch nur teilweise abgedeckt werden.

Natürlich können die Randteile 24,25 auch eine Länge besitzen, die erheblich kleiner als die maximal mögliche Länge dieser Randteile ist.

In Fig.1 wird ein Abdeckelement 16 gezeigt, welches durch eine Schwenkbewegung des kurzen Randteiles 25 um eine einzige Schwenkachse 23 von seinem zugefächerten Zustand in seinen aufgefächerten Zustand und umgekehrt bewegbar ist. In Fig.5 wird ein Abdeckelement 16 gezeigt, welches durch drei verschiedene Bewegungen des kurzen Randteiles 25 auffächerbar ist. Zunächst wird das Randteil 25 um eine nicht näher bezeichnete Schwenkachse im Gegenuhrzeigersinn und dabei etwa um einen 90-Grad-Bereich verschwenkt. Die vorgenannte Schwenkachse befindet sich dabei etwa im Bereich der vertikalen Kante des Randteiles 24, welche zum Öffnungsrand 13 zeigt. Sodann wird das etwa vertikal ausgerichtete Randteil 25 etwa parallel hin zum Rand 13 verschoben. Sobald es mit seinem unteren Eckbereich am Rand 13 zum Anliegen kommt, geht die bisherige Parallelverschiebung in eine Schwenkbewegung über. Die dem Abdeckelement 16 zugeordnete zweite Schwenkachse liegt dabei außerhalb der Öffnung 11 und unterhalb des Randes 12. Somit besitzt die in Fig.5 dargestellte Verschlußeinrichtung 10 ein Abdeckelement 16, mit zwei verschiedenen Schwenkachsen.

In den Figuren 1-4 und 7-15 ist der kurze Randteil 25,25' um die Schwenkachse 23,23' schwenkbar gehalten, wogegen der lange Randteil 24,24' am zugeordneten Öffnungsrand fixiert ist. Betrachtet man sämtliche in den vorgenannten Figuren dargestellten Abdeckelemente 16,16' in Seitansicht und im aufgefächerten Abdeckzustand, stellt man fest, daß jedes Abdeckelement 16,16' so ausgebildet ist, daß zumindest ein klar abgegrenzter Behangbereich als Kreisausschnitt ausgebildet ist. In einer weiteren vorteilhaften Ausführungsform kann das Abdeckelement 16,16' zwei, drei usw. und damit mehrere klar abgegrenzte Behangbereiche besitzen, die jeweils als Kreisausschnitt ausgebildet sind. Der Einfachheit halber wird nachfolgend der als "Kreisausschnitt ausgebildete Behangbereich" nur noch als "Kreisausschnitt" bezeichnet.
In einer ersten Ausführungsform grenzt der jeweilige Kreisausschnitt mit einer seiner beiden geradlinigen Seiten direkt an das kurze Randteil 25. In einer zweiten Ausführungsform grenzt der jeweilige Kreisausschnitt mit einer seiner beiden geradlinigen Kanten direkt an das lange Randteil 24. In einer dritten Ausführungsform ist der jeweilige Kreisausschnitt derart am Abdeckelement 16,16' angeordnet, daß keine seiner beiden geradlinigen Randseiten an eines der beiden Randteile 24,25 grenzt und dieses damit direkt berührt.

In Fig.7 wird das Abdeckelement 16 aus zwei Kreisausschnitten und einem von beiden eingeschlossenem Teil gebildet, bei welchem die Elementteile im Uhrzeigersinn und damit in Freigaberichtung des Abdeckelementes 16 gesehen, stetig länger werden. Der linke obere Kreisausschnitt liegt am kurzen Randteil 25 und der rechte untere Kreisausschnitt liegt am langen Randteil 24 an.

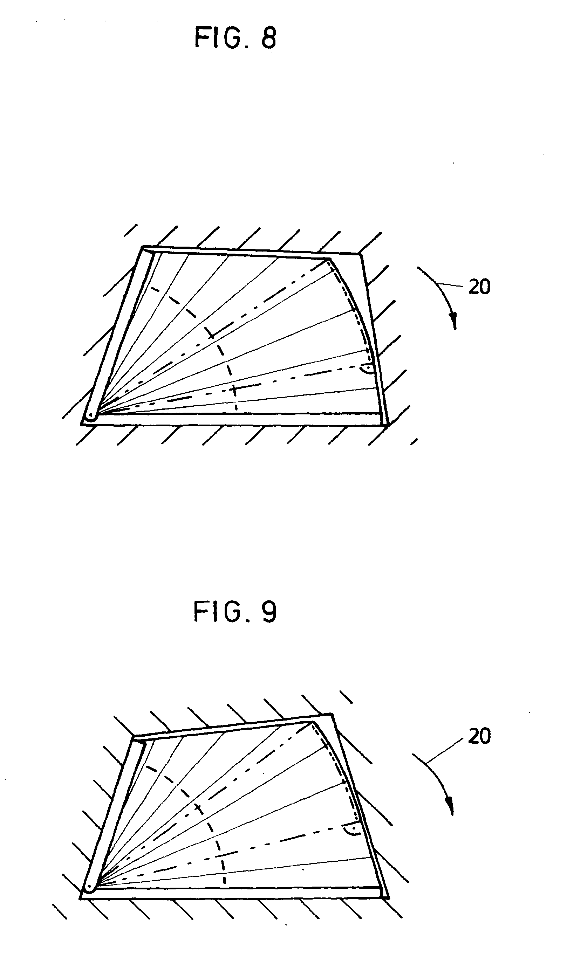

In Fig.8 und Fig.9 wird das Abdeckelement 16 aus einem Kreisausschnitt und aus zwei den Kreisausschnitt einrahmenden dreieckförmigen Behangbereichen gebildet. Das Behangdreieck zwischen Kreisausschnitt und langem Randteil 24 ist als rechtwinkliges Dreieck ausgebildet, dessen rechtwinkliger Dreiecksbereich direkt an den Kreisausschnitt angrenzt. Der dreieckförmige Behangbereich zwischen Randteil 25 und dem Kreisausschnitt ist einfach nur als Dreieck ausgebildet.

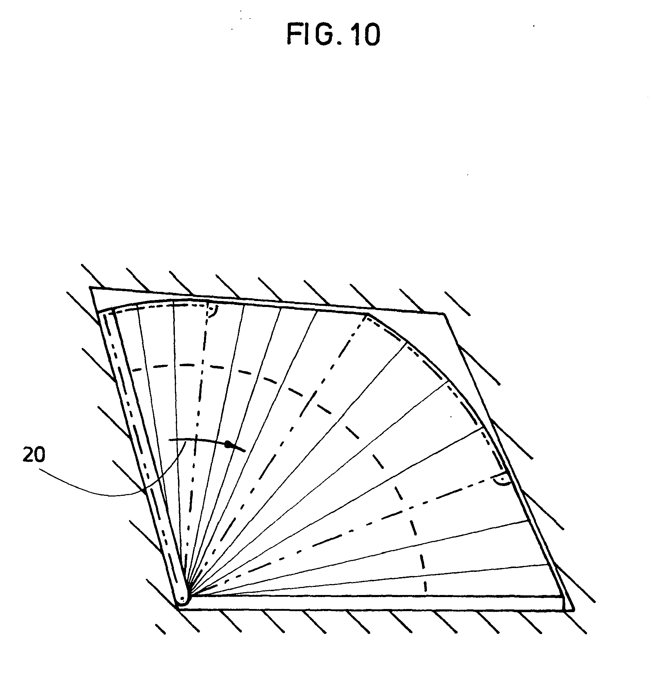

In Fig.10 wird das Abdeckelement aus zwei Kreisausschnitten und zwei Behangdreiecken gebildet. Dabei sind Kreisausschnitte und Behangdreiecke auf dem ABdeckelement so zueinander angeordnet, daß diese jeweils im Wechsel aufeinander folgen. Die beiden Behangdreiecke sind dabei jeweils als rechtwinkliges Dreieck ausgebildet. Der an das Randteil 25 angrenzende Behangbereich ist als Kreisausschnitt ausgebildet, an den sich ein rechtwinkliges Behangdreieck anschließt, dem wiederum ein Kreisausschnitt folgt. An diesen Kreisausschnitt schließt sich wiederum ein rechtwinkliges Dreieck , Behangdreieck an, welches mit seinem unteren Rand direkt an das lange Randteil 24 grenzt.

In Fig.11 wird das Abdeckelement aus einem direkt an den kurzen Randteil 25 grenzenden Kreisausschnitt und einem zwischen Kreisausschnitt und langem Randteil 24 sich erstreckenden Behangbereich gebildet, bei welchem die Elementteile ausgehend vom Kreisausschnitt hin zum langen Randteil 24 und damit in Freigaberichtung länger werden.

In Fig.12 wird das Abdeckelement aus einem Kreisausschnitt gebildet, der zwischen zwei anderen Behangbereichen liegt. Diese beiden anderen Bereiche bestehen aus Elementteilen, welche vom kurzen Randteil 25 hin zum langen Randteil 24 und damit in Freigaberichtung des Abdeckelementes stetig länger werden. Der untere, kleinere der beiden anderen Behangbereiche grenzt mit seinem unteren Rand direkt an das Randteil 25 und mit seinem oberen Rand an den Kreisausschnitt. Der obere, große der beiden anderen Behangbereiche grenzt mit seinem rechten Rand an den Kreisausschnitt und mit seinem linken Rand an das lange Randteil 24.

In Fig.13 ist die Behangfläche des Abdeckelementes wie in Fig.8 und in Fig.9 aufgegliedert.

In Fig.15 werden zwei gleichartige Abdeckelemente 16 und 16' gezeigt, wobei hier nur das überlappende Abdeckelement 16' beschrieben wird. Das überlappende Abdeckelement 16' wird von zweiKreisausschnitten gebildet, die zwischen sich ein rechtwinkliges Behangdreieck einrahmen. Der große Kreisausschnitt grenzt mit seinem oberen Rand an das lange Randteil 24 und mit seinem unteren Rand an die lange Seite des rechtwinkligen Behangdreiecks. Der kleine Kreisausschnitt grenzt mit seinem rechten Rand an das kurze Randteil 25 und mit seinem linken Rand an das rechtwinklige Behangdreieck. Die Behangdreiecke und die Behangwinkelteile mit Bogenrand (Fig.11,12) sind Behangbereiche, deren Elementteile in Freigaberichtung des Abdeckelementes stetig länger werden.
In sämtlichen Figuren, außer in Fig.1, ist der Umfangsrand jedes Kreisausschnittes mit einer strich-zwei-punktierten Linie markiert.

In einer vorteilhaften Ausführungsform der Erfindung besteht ein Abdeckelement aus einem Kreisausschnitt und einem Behangdreieck ( Fig.11, Fig.14 ).
In einer weiteren vorteilhaften Ausführungsform besteht ein Abdeckelement aus zwei Kreisausschnitten und einem zwischen diesen beiden Kreisausschnitten liegenden Behangdreieck ( Fig.7, Fig.15 ).
In einer weiteren vorteilhaften Ausführungsform besteht ein Abdeckelement aus zwei Behangdreiecken und einem zwischen diesen beiden Behangdreiecken liegendem Kreisausschnitt ( Fig.8, Fig.9, Fig.12, Fig.13 ).
In einer weiteren vorteilhaften Ausführungsform besteht ein Abdeckelement aus zwei Kreisausschnitten und zwei Behangdreiecken, die im Wechsel aufeinander folgen ( Fig.10 ).
In einer weiteren vorteilhaften Ausführungsform ist das Behangdreieck als rechtwinkliges Dreieck ausgebildet.
In einer weiteren vorteilhaften Ausführungsform grenzt der rechtwinklige Bereich eines Behangdreiecks direkt an einen Kreisausschnitt , an den Kreisausschnitt desselben Behanges. Natürlich kann ein Behangdreieck auch als Dreieck ohne rechten Winkel ausgebildet sein.
In einer weiteren vorteilhaften Ausführungsform grenzt der kurze Randteil 25 genau dann direkt an einen Kreisausschnitt eines beiden zugeordneten Abdeckelementes, wenn der obere Endpunkt des kurzen Randteiles im Abdeckzustand des Abdeckelementes in einem spitzwinkligen Bereich der abzudeckenden Öffnung liegt.
In einer weiteren vorteilhaften Ausführungsform grenzt der kurze Randteil 25 genau dann direkt an ein Behangdreieck eines beiden zugeordneten Abdeckelementes, wenn der obere Endpunkt des kurzen Randteiles im Abdeckzustand des Abdeckelementes in einem stumpfwinkligen Bereich der abzudeckenden Öffnung liegt.

Wird die Verschlußeinrichtung 10 aus ihrer Freigabestellung gemäß Fig.2 in ihre Abdeckstellung gemäß Fig.1 verschwenkt, wird die Öffnung 11 im Wesentlichen vollständig abgedeckt. Der Behangrand 22 des Abdeckelementes 16 verläuft dabei etwa bogenförmig. Kommt für das plissierte Abdeckelement ein Material zur Verwendung, das wie die meisten Plisseematerialien in sich sehr flexibel ist, kippt das Abdeckelement 16 beim Überschreiten einer bestimmten Größe im ausgefächerten Abdeckzustand aus der Aufspannebene heraus. Dieses Herauskippen aus der Aufspannebene wird dadurch verhindert, daß der Verschlußeinrichtung 10 ein bereits beschriebenes Führungsseil 30 zugeordnet wird. Wird das Abdeckelement 16 der Verschlußeinrichtung 10 jedoch so aufgefächert, daß im Ausfahrzustand des Abdeckelementes 16 und dabei in Sicht von oben der Behangrand 22 nicht im Wesentlichen stark zickzackartig sondern nahezu als eine Gerade mit nur noch minimalem Zickzackverlauf erscheint, wird der Behangrand 22 selbst zu einem Stabilisierungselement, welches verhindert, daß das Abdeckelement 16 aus der Aufspannebene herauskippt. Dabei muß jedoch die Länge des für das Abdeckelement verwendeten Materials im völlig auseinandergezogenen, noch nicht eingebauten Zustand desselben gleich der Länge des Behangrandes 22 sein oder darf diese Länge nur geringfügig überschreiten.

Das Abdeckelement 16 eines beliebigen Verschlußelementes wird aus einem plissierten etwa rechteckig ausgebildeten Grundelement herausgeschnitten. Dieses Grundelement besteht im senkrecht herabhängenden Zustand aus etwa horizontalen Elementteilen 17 mit etwa horizontal und parallel zueinander verlaufenden Achsen 19.

In Fig.2 befindet sich die Verschlußeinrichtung 10 in Freigabestellung. Dabei wird das lange Randteil 24 über ca. dreiviertel seiner Länge vom kurzen Randteil 25 abgedeckt. Aus dem nicht abgedeckten Bereich des langen Randteiles 24 ragen Elementteile 17 heraus und stellen sich nach oben.
Um auch diese nicht abgedeckten Elementteile 17 abdecken zu können, wird dem Randteil 25 ein nicht gezeigtes Verschlußteil zugeordnet, welches am Randteil 25 schiebbar gehalten ist. Das Verschlußteil kann dabei z.B. als Flachelement oder als U-Profil ausgebildet werden.

In einer weiteren vorteilhaften Ausführungsform weist die Verschlußeinrichtung 10 im Bereich der Schwenkachse 23 und damit im Gelenkbereich eine Fixiereinrichtung auf, mit der der kurze Randteil 25 relativ zum langen Randteil 24 exakt festlegbar ist. Die vorgenannte Festlegung des Randteiles 25 erfolgt dabei vorzugsweise in der aufgefächerten Abdeckstellung der Verschlußeinrichtung 10. Auf diese Weise können die Magnetteile, Halter 33 entfallen.

In einer weiteren vorteilhaften Ausführungsform ist zumindest das lange Randteil 24 als in Grenzen flexibles Teil ausgebildet. Manche Fahrzeugfenster haben heute Öffnungen 11, deren unterer Rand 12 und/oder seitlicher Rand 13 gekrümmt verläuft. Nur dann, wenn das zugeordnete Randteil 24,25 über einen Teil oder über seine ganze Länge zumindest in Grenzen flexibel ausgebildet ist, kann sich dieses Randteil an den entsprechenden Rand der Öffnung voll anpassen.

In einer vorteilhaften Ausführungsform kann auch ein Rechteckfenster mit der erfindungsgemäßen Verschlußeinrichtung bestückt und abgedeckt werden. Dazu wird die Verschlußeinrichtung aus zwei einander überlappenden Abdeckelementen entsprechend Fig.14 und Fig.15 gebildet.

Der kurze Randteil 25 besitzt eine maximale Länge die kleiner ist als der kleinste zwischen der Schwenkachse 23 und dem gegenüberliegenden Öffnungsrand 14,15 gemessene Abstand. Natürlich muß zu der vorgenannten maximalen Länge noch ein bestimmtes Maß für die notwendige Lochleibung hinzugezählt werden.

Das mindestens eine Führungsseil 30 ist am Abdeckelement 16 und zwar relativ zu diesem beweglich angeordnet. Dabei muß die Verschlußeinrichtung 10 so gestaltet sein, daß diese problemlos von der Freigabestellung in die Abdeckstellung und umgekehrt bewegt werden kann und während des Bewegungsvorganges nicht an einem öffnungsrand hängenbleibt oder gar an einem Öffnungsrand eingeklemmt wird.

Im Aufbewahrzustand der Verschlußeinrichtung 10 bildet diese einen Stapel 18. Dabei kann die Stapelkante, welche der Schwenkachse 23 benachbart ist, gemäß Fig.4 z.B. als liegendes V ausgebildet sein. Die vorgenannte Stapelkante kann aber auch als Bogenlinie gestaltet. Dabei kann der Bogenbauch in einer Ausführungsform in Richtung der Schwenkachse 23 und in einer anderen Ausführungsform in die entgegengesetzte Richtung weisen.
Bei allen Aussagen über gleiche, zunehmende und abnehmende Längen von Elementteilen 17 geht man von einem Abdeckelement 16 aus, dessen Elementteile 17 in Freigabestellung einen Stapel 18 mit in Seitansicht rechtwinklig verlaufender und zur Schwenkachse 23 weisender Endkante bilden. Nachdem auf diese Weise die ideale Länge der jeweiligen Elementteile 17 ermittelt wurde, werden je nach Ausbildung des zur Schwenkachse 23 weisenden Stapelendes entsprechende Werte von der Länge der Elementteile 17 in Abzug gebracht.

## Patentansprüche

1. Verschlusseinrichtung für Fenster, Türen od.dgl. Öffnungen (11), mit mindestens einem Abdeckelement (16), das bewegliche, auf- und zufächerbare Elementteile (17) aufweist, die zu einem etwa flächigen Verschluss auffächerbar und zu einem Stapel (18) zufächerbar sind, wobei das mindestens eine Abdeckelement (16, 16') hinsichtlich seiner möglichen Auffächerung und hinsichtlich seiner Randkontur, die sich im aufgefächerten Zustand der Elementteile (17) ergibt, an den jeweiligen Randverlauf der Öffnung (11,11') derart angepasst ist, dass die Öffnung (11,11') im wesentlichen völlig abgedeckt ist, und zwei im aufgefächerten Zustand unter einem Winkel zueinander verlaufende Randteile (24,24' und 25,25') aufweist, von denen jeder an einem Ende des mindestens einen Abdeckelements (16, 16') angreift und die in einem gemeinsamen Bereich (21, 21') mit einer dortigen Schwenkachse (23) zusammengeführt sind, wobei ein Randteil (25,25') kürzer bemessen ist als der andere Randteil (24,24') und der kürzere Randteil (25,25') in Bezug auf den festgehaltenen längeren Randteil (24,24') schwenkbar ist,
**dadurch gekerinzeichnet**,
**dass** das mindestens eine Abdeckelement (16, 16') aus einem plissierten, im aufgefächerten Zustand im wesentlichen biege- und knicksteifen, sich auf dem Schwenkbereich zwischen beiden Randteilen (24, 24' und 25, 25') durchgehend erstreckenden Fächerbehang gebildet ist, dessen Elementteile (17) aus ziehharmonikaartig klappbar verbundenen Streifenteilen gebildet sind, wobei auf dem Schwenkbereich zwischen den beiden Randteilen (24, 24' und 25, 25') mindestens ein Behangbereich vorgesehen ist, der Elementteile (17) mit jeweils gleichbleibender Länge, gemessen ausgehend vom gemeinsamen Bereich (21,21'), aufweist und als Kreisausschnitt ausgebildet ist, und zusätzlich mindestens ein weiterer Behangbereich vorgesehen ist, der Elementteile (17) mit variierender Länge, gemessen ausgehend vom gemeinsamen Bereich (21,21'), aufweist und als dreieckförmiger Behangbereich ausgebildet ist und sich einer dieser Behangbereiche an einen der beiden Randteile (24, 24' und 25, 25') anschließt, dass bei dem Behangbereich mit Elementteilen (17) mit variierender Länge die Länge der Elementteile (17) in Schwenkrichtung des kürzeren Randteils (25, 25') zum längeren Randteil (24, 24') hin zunimmt und dass im aufgefächerten Zustand des Abdeckelements (16, 16') ein Kreisausschnitt zumindest mit einer Seite an den dreieckförmigen Behangbereich grenzt und dass dem kürzeren Randteil (25, 25') ein daran schiebbar gehaltenes Verschlussteil, insbesondere in der Ausbildung als Flachelement oder als U-Profil, zugeordnet ist zur Abdeckung von in der Freigabestellung nicht vom kürzeren Randteil (25, 25') abgedeckten, sich hochstellenden Elementteilen (17).

2. Verschlusseinrichtung nach Anspruch 1,
**dadurch gekennzeichnet,**
**dass** die Elementteile (17) ausgehend von dem kürzeren Randteil (25,25') hin zu dem längeren Randteil (24,24') eine solche Länge besitzen, die kleiner oder höchstens gleich der Länge des direkt benachbarten, nächst- folgenden und näher beim längeren Randteil (24,24') gelegenen Elementteil (17) ist.

3. Verschlusseinrichtung nach Anspruch 1 oder 2,
**dadurch gekennzeichnet,**
**dass** die Randteile (24,24' und 25,25') unter einem Winkel von 90° oder größer oder kleiner zueinander verlaufen.

4. Verschlusseinrichtung nach einem der Ansprüche 1 bis 3,
**dadurch gekennzeichnet,**
**dass** die Randteile (24,24' und 25,25') in Form von U-Profilen mit ihren Öffnungen einander zugewandt sind und im Stapelzustand einander übergreifen können und der Stapel (18) im Inneren dieser lagert.

5. Verschlusseinrichtung nach einem der Ansprüche 1 bis 4,
**dadurch gekennzeichnet,**
**dass** die Randteile (24,25 und 24',25') im gemeinsamen Bereich (21,21') quer zu der Schwenkachse (23,23') verschieblich verbunden sind.

6. Verschlusseinrichtung nach Anspruch 5,
**dadurch gekennzeichnet,**
**dass** ein Randteil (24,24') im gemeinsamen Bereich (21,21') ein Langloch (26) aufweist, das quer zum Längsverlauf des Randteiles (24,24') gerichtet ist, und dass der andere Randteil (25,25') mittels eines das Langloch (26) durchsetzenden Bolzens (27) mit dem einen Randteil (24,24') schwenkbar verbunden ist.

7. Verschlusseinrichtung nach einem der Ansprüche 1 bis 6,
**dadurch gekennzeichnet,**
**dass** die den plissierten Behang bildenden Elementteile (17), insbesondere Streifenteile, im gemeinsamen Bereich (21,21') am dortigen Ende unterschiedlich lang bemessen sind.

8. Verschlusseinrichtung nach Anspruch 7,
**dadurch gekennzeichnet,**
**dass** die Länge der Elementteile (17), insbesondere Streifenteile, so bemessen ist, dass der Stapel (18) etwa entsprechend einem liegenden V nach außen zugespitzt ist (Spitze 28).

9. Verschlusseinrichtung nach einem der Ansprüche 1 bis 8,
**gekennzeichnet durch**
zwei oder mehrere eigenständige Abdeckelemente (16 und 16'), die nebeneinander angeordnet sind und unter teilweiser Überlappung im aufgefächerten Zustand zusammen die Öffnung (11') im Wesentlichen völlig abdecken.

10. Verschlusseinrichtung nach Anspruch 9,
**dadurch gekennzeichnet,**
**dass** bei zwei Abdeckelementen (16,16') deren jeweilige gemeinsame Bereiche (21,21'), insbesondere jeweilige Schwenkachsen (23,23'), etwa auf einer Linie, jedoch entlang dieser Linie mit Abstand voneinander, verlaufen.

11. Verschlusseinrichtung nach Anspruch 9 oder 10,
**dadurch gekennzeichnet,**
**dass** bei zwei Abdeckelementen (16,16') im aufgefächerten Zustand deren eine Randteile (24,24') etwa auf einer Linie verlaufen und deren andere Randteile (25,25') etwa entsprechend U-Schenkeln dazu ausgerichtet sind.

12. Verschlusseinrichtung nach einem der Ansprüche 1 bis 11,
**dadurch gekennzeichnet,**
**dass** das Abdeckelement (16,16') im aufgefächerten Abdeckzustand aus mindestens zwei verschiedenartigen Behangbereichen besteht.

13. Verschlusseinrichtung nach einem der Ansprüche 1 bis 12,
**dadurch gekennzeichnet,**
**dass** einer der Behangbereiche als rechtwinkliges Dreieck oder als Behangwinkelteil mit Bogenrand ausgebildet ist.

14. Verschlusseinrichtung nach einem der Ansprüche 1 bis 13,
**dadurch gekennzeichnet,**
**dass** der Kreisausschnitt oder der dreieckförmige Bereich oder der Behangwinkelteil mit Bogenrand mit einer Seite am kurzen Randteil (25,25') angreift.

15. Verschlusseinrichtung nach einem der Ansprüche 1 bis 14,
**dadurch gekennzeichnet,**
**dass** der Außenrand des Abdeckelements (16,16') im aufgefächerten Abdeckzustand teilweise bogenförmig und/oder kreisbogenförmig und/oder geradlinig verläuft.

16. Verschlusseinrichtung nach einem der Ansprüche 1 bis 15,
**dadurch gekennzeichnet,**
**dass** im aufgefächerten Abdeckzustand des Abdeckelements (16,16') ein Kreisausschnitt zumindest mit einer Seite an ein Behangwinkelteil mit Bogenrand grenzt.

17. Verschlusseinrichtung nach einem der Ansprüche 1 bis 16,
**dadurch gekennzeichnet,**
**dass** im aufgefächerten Abdeckzustand des Abdeckelements (16,16') dessen Behangrand (22) nicht im wesentlichen zickzackartig sondern nahezu als Gerade verläuft und ein Stabilisierungselement bildet, welches ein Herauskippen des Abdeckelements (16,16') aus der Aufspannebene verhindert.

18. Verschlusseinrichtung nach einem der Ansprüche 1 bis 17,
**dadurch gekennzeichnet,**
**dass** im aufgefächerten Abdeckzustand des Abdeckelements (16,16') ein Kreisausschnitt zumindest mit einer Seite an einen dreieckförmigen Behangbereich oder an ein Behangwinkelteil mit Bogenrand grenzt.

19. Verschlusseinrichtung nach einem der Ansprüche 1 bis 18,
**dadurch gekennzeichnet,**
**dass** im aufgefächerten Abdeckzustand des Abdeckelements (16,16') dessen Behangrand (22) nicht im wesentlichen zickzackartig sondern nahezu als Gerade verläuft und ein Stabilisierungselement bildet, welches ein Herauskippen des Abdeckelements (16,16') aus der Aufspannebene verhindert.

## Claims

1. Closure arrangement for windows, doors or similar openings (11), comprising at least one covering element (16) which has movable fan-out and fold-up element parts (17) which can be fanned out to form an approximately planar closure and can be folded up to form a stack (18), wherein the at least one covering element (16, 16') is tailored, in terms of its possible fanning spread and in terms of its edge contour which results with the element parts (17) in the fanned-out state, to the respective edge profile of the opening (11, 11') in such a way that the opening (11, 11') is substantially completely covered, and comprises two edge parts (24, 24' and 25, 25') which extend at an angle to one another in the fanned-out state, each of which acts on one end of the at least one covering element (16, 16') and which are brought together in a common region (21, 21') with a pivot axis (23) there, wherein one edge part (25, 25') is designed to be shorter than the other edge part (24, 24') and the shorter edge part (25, 25') can be pivoted with respect to the fixed longer edge part (24, 24'), **characterized in that** the at least one covering element (16, 16') is formed from a pleated fan curtain which is substantially bend-proof and buckle-proof in the fanned-out state and extends continuously at the pivoting region between the two edge parts (24, 24' and 25, 25'), the element parts (17) of which curtains are formed from strip parts which are foldably connected in a concertina-like manner, wherein, at the pivoting region between the two edge parts (24, 24' and 25, 25'), at least one curtain region is provided which has element parts (17) each having a uniform length, measured starting from the common region (21, 21'), and which is formed as a circular sector, and in addition at least one further curtain region is provided which has element parts (17) of varying length, measured starting from the common region (21, 21'), and which is formed as a triangular curtain region, and one of these curtain regions adjoins one of the two edge parts (24, 24' and 25, 25'), **in that**, in the case of the curtain region having element parts (17) of varying length, the length of the element parts (17) increases towards the longer edge part (24, 24') in the pivoting direction of the shorter edge part (25, 25'), and **in that**, with the covering element (16, 16') in the fanned-out state, a circular sector has at least one side adjoining the triangular curtain region, and **in that** the shorter edge part (25, 25') is assigned a closure part held slideably thereon, in particular in the form of a flat element or a U-shaped profile, for the purpose of covering upwardly rising element parts (17) which are not covered by the shorter edge part (25, 25') in the released position.

2. Closure arrangement according to Claim 1, **characterized in that,** starting from the shorter edge part (25, 25') towards the longer edge part (24, 24'), the element parts (17) have a length which is such as to be smaller or at most equal to the length of the directly adjacent, immediately following element part (17) situated closer to the longer edge part (24, 24').

3. Closure arrangement according to Claim 1 or 2, **characterized in that** the edge parts (24, 24' and 25, 25') extend at an angle of 90° or at a greater or smaller angle to one another.

4. Closure arrangement according to one of Claims 1, to 3, **characterized in that** the edge parts (24, 24' and 25, 25') are in the form of U-shaped profiles with their openings directed towards one another and can engage over one another in the stacked state, and the stack (18) is stored inside these edge parts.

5. Closure arrangement according to one of Claims 1 to 4, **characterized in that** the edge parts (24, 25 and 24', 25') are connected so as to be displaceable transversely with respect to the pivot axis (23, 23') in the common region (21, 21').

6. Closure arrangement according to Claim 5, **characterized in that** one edge part (24, 24') is provided in the common region (21, 21') with a slot (26) which is directed transversely to the longitudinal extent of the edge part (24, 24'), and **in that** the other edge part (25, 25') is pivotally connected to the first edge part (24, 24') by means of a pin (27) passing through the slot (26).

7. Closure arrangement according to one of Claims 1 to 6, **characterized in that** the element parts (17), in particular strip parts, forming the pleated curtain are dimensioned to have different lengths at their end situated in the common region (21, 21').

8. Closure arrangement according to Claim 7, **characterized in that** the length of the element parts (17), in particular strip parts, is dimensioned such that the stack (18) is outwardly tapered (point 28) so as to approximately correspond to a horizontal V.

9. Closure arrangement according to one of Claims 1 to 8, **characterized by** two or more independent covering elements (16 and 16') which are arranged next to one another and together substantially completely cover the opening (11') with partial overlapping in the fanned-out state.

10. Closure arrangement according to Claim 9, **characterized in that**, in the case of two covering elements (16, 16'), their respective common regions (21, 21'), in particular respective pivot axes (23, 23'), extend approximately in a line, but at a distance from one another along this line.

11. Closure arrangement according to Claim 9 or 10, **characterized in that**, in the case of two covering elements (16, 16') in the fanned-out state, their one lot of edge parts (24, 24') extends approximately in a line and their other lot of edge parts (25, 25') is oriented thereto approximately corresponding to U-arms.

12. Closure arrangement according to one of Claims 1 to 11, **characterized in that,** in the fanned-out covering state, the covering element (16, 16') comprises at least two different curtain regions.

13. Closure arrangement according to one of Claims 1 to 12, **characterized in that** one of the curtain regions is formed as a right-angled triangle or as an angled curtain part with a curved edge.

14. Closure arrangement according to one of Claims 1 to 13, **characterized in that** the circular segment or the triangular region or the angled curtain part with a curved edge has one side acting on the short edge part (25, 25').

15. Closure arrangement according to one of Claims 1 to 14, **characterized in that**, in the fanned-out covering state, the outer edge of the covering element (16, 16') extends partially in a curved shape and/or circular arc shape and/or in a straight line.

16. Closure arrangement according to one of Claims 1 to 15, **characterized in that,** with the covering element (16, 16') in the fanned-out covering state, a circular sector has at least one side adjoining an angled curtain part with a curved edge.

17. Closure arrangement according to one of Claims 1 to 16, **characterized in that,** with the covering element (16, 16') in the fanned-out covering state, the curtain edge (22) thereof extends not in a substantially zigzag manner but virtually as a straight line and forms a stabilizing element which prevents the covering element (16, 16') from tilting out of the deployment plane.

18. Closure arrangement according to one of Claims 1 to 17, **characterized in that**, with the covering element (16, 16') in the fanned-out covering state, a circular sector has at least one side adjoining a triangular curtain region or an angled curtain part with a curved edge.

19. Closure arrangement according to one of Claims 1 to 18, **characterized in that**, with the covering element (16, 16') in the fanned-out covering state, the curtain edge (22) thereof extends not in a substantially zigzag manner but virtually as a straight line and forms a stabilizing element which prevents the covering element (16, 16') from tilting out of the deployment plane.

## Revendications

1. Dispositif de fermeture pour fenêtres, portes ou autres ouvertures (11) similaires, avec au moins un élément de recouvrement (16) comportant des parties d'élément (17) mobiles pouvant être disposées ou étalées en éventail, lesdites parties pouvant être disposées en éventail par rapport à une fermeture approximativement plane et étalées en éventail par rapport à un empilement (18), l'au moins un élément de recouvrement (16, 16') étant adapté de telle sorte à la courbe respective de la bordure des ouvertures (11, 11') par rapport à sa possible disposition en éventail et par rapport à son contour de bordure obtenu à l'état disposé en éventail des parties d'élément (17) que l'ouverture (11, 11') est pour l'essentiel entièrement recouverte et ledit élément de recouvrement comportant deux parties de bordure (24, 24' et 25, 25') formant un angle donné l'une par rapport à l'autre à l'état disposé en éventail, chaque partie de bordure s'engrenant au niveau d'une extrémité de l'au moins un élément de recouvrement (16, 16') et lesdites parties de bordure étant introduites conjointement dans une zone commune (21, 21') avec un axe de pivotement (23) local, une partie de bordure (25, 25') étant mesurée plus courte que l'autre partie de bordure (24, 24') et la plus petite partie de bordure (25, 25') pouvant pivoter par rapport à la plus longue partie de bordure (24, 24') maintenue fixement, **caractérisé en ce que** l'au moins un élément de recouvrement (16, 16') est formé à partir d'une tenture d'éventail plissée, pour l'essentiel rigide à la torsion et au pliage à l'état disposé en éventail et s'étendant de façon traversante sur la zone de pivotement située entre les deux parties de bordure (24, 24' et 25, 25'), les parties d'élément (17) de ladite tenture d'éventail étant formées à partir de parties en bandes reliées de façon rabattable comme un accordéon, au moins une zone de tenture étant prévue sur la zone de pivotement disposée entre les deux parties de bordure (24, 24' et 25, 25'), ladite zone de tenture comportant des parties d'élément (17) présentant une longueur respectivement constante, mesurée à partie d'une zone commune (21, 21') et prenant la forme d'une section de cercle, et au moins une autre zone de tenture étant en outre prévue, ladite zone comportant des parties d'élément (17) de longueur variable, mesurées à partir d'une zone commune (21, 21') et prenant la forme d'une zone de tenture triangulaire et une de ces zones de tenture étant contigüe à une des deux parties de bordure (24, 24' et 25, 25'), **en ce qu'**en présence d'une zone de bordure avec des parties d'élément (17) de longueur variable, la longueur des parties d'élément (17) augmente dans la direction de pivotement de la partie de bordure (25, 25') la plus courte en direction de la partie de bordure (24, 24') la plus longue et **en ce qu'**à l'état disposé en éventail de l'élément de recouvrement (16, 16'), une section de cercle est attenante au moins avec un côté à la zone de tenture triangulaire et **en ce qu'**une partie de fermeture maintenue de façon coulissante contre elle, notamment sous la forme d'un élément plat ou d'un profilé en U, est associée à la partie de bordure (25, 25') la plus courte pour recouvrir les parties d'élément (17) se plaçant en hauteur et non recouvertes par la partie de bordure (25, 25') la plus courte dans la position de déblocage.

2. Dispositif de fermeture selon la revendication 1, **caractérisé en ce que** les parties d'élément (17) possèdent une longueur telle en partant de la partie de bordure (25, 25') la plus courte en direction de la partie de bordure (24, 24') la plus longue qu'elle est inférieure ou tout au plus égale à la longueur de la partie d'élément (17) disposée directement à côté, après ou à proximité en présence de la partie de bordure (24, 24') la plus longue.

3. Dispositif de fermeture selon la revendication 1 ou 2, **caractérisé en ce que** les parties de bordure (24, 24' et 25, 25') s'étendent l'une par rapport à l'autre selon un angle de 90° ou selon un angle supérieur ou inférieur.

4. Dispositif de fermeture selon l'une quelconque des revendications 1 à 3, **caractérisé en ce que** les parties de bordure (24, 24' et 25, 25') sont tournées les unes vers les autres avec leurs ouvertures sous la forme de profilés en U et peuvent se chevaucher à l'état empilé et l'empilement (18) reposant à l'intérieur de celles-ci.

5. Dispositif de fermeture selon l'une quelconque des revendications 1 à 4, **caractérisé en ce que** les parties de bordure (24, 25 et 24', 25') sont reliées de façon coulissante transversalement dans la zone commune (21, 21') par rapport à l'axe de pivotement (23, 23').

6. Dispositif de fermeture selon la revendication 5, **caractérisé en ce qu'**une partie de bordure (24, 24') comporte un trou oblong (26) dans la zone commune (21, 21'), ledit trou étant orienté transversalement par rapport à la courbe longitudinale de la partie de bordure (24, 24') et **en ce que** l'autre partie de bordure (25, 25') peut être reliée de façon pivotante à la partie de bordure (24, 24') à l'aide d'un boulon (27) traversant le trou oblong (26).

7. Dispositif de fermeture selon l'une quelconque des revendications 1 à 6, **caractérisé en ce que** les parties d'éléments (17) formant la tenture plissée, notamment les parties en bandes, sont mesurées de façon à être de différentes longueurs au niveau de l'extrémité locale, dans la zone commune (21, 21').

8. Dispositif de fermeture selon la revendication 7, **caractérisé en ce que** la longueur des parties d'élément (17), notamment des parties en bandes, est mesurée de telle sorte que l'empilement (18) est quelque peu taillé en pointe vers l'extérieur (pointe 28) comme un V allongé.

9. Dispositif de fermeture selon l'une quelconque des revendications 1 à 8, **caractérisé par** deux éléments de recouvrement (16 et 16') ou plus indépendants disposés les uns à côté des autres et recouvrant ensemble pour l'essentiel entièrement l'ouverture (11') en situation de chevauchement partiel à l'état disposé en éventail.

10. Dispositif de fermeture selon la revendication 9, **caractérisé en ce qu'**en présence de deux éléments de recouvrement (16, 16'), leurs zones communes (21, 21') respectives, notamment leurs axes de pivotement (23, 23') respectifs, s'étendent approximativement sur une ligne, toutefois à une certaine distance les uns des autres le long de cette ligne.

11. Dispositif de fermeture selon la revendication 9 ou 10, **caractérisé en ce qu'**en présence de deux éléments de recouvrement (16, 16') à l'état disposé en éventail, leurs parties de bordure (24, 24') s'étendent approximativement sur une ligne et leurs autres parties de bordure (25, 25') sont orientées par rapport à elles approximativement comme des côtés en U.

12. Dispositif de fermeture selon l'une quelconque des revendications 1 à 11, **caractérisé en ce que** l'élément de recouvrement (16, 16') se compose d'au moins deux zones de tenture différentes dans l'état de recouvrement disposé en éventail.

13. Dispositif de fermeture selon l'une quelconque des revendications 1 à 12, **caractérisé en ce qu'**une des zones de tenture prend la forme d'un triangle rectangle ou d'une partie angulaire de tenture dotée d'une bordure arquée.

14. Dispositif de fermeture selon l'une quelconque des revendications 1 à 13, **caractérisé en ce que** la section de cercle ou la partie angulaire de tenture avec bordure arquée s'engrène avec un côté au niveau de la partie de bordure (25, 25') courte.

15. Dispositif de fermeture selon l'une quelconque des revendications 1 à 14, **caractérisé en ce que** le bord extérieur de l'élément de recouvrement (16, 16') s'étend en partie en forme d'arc et/ou en bordure arquée en forme d'arc de cercle et/ou en ligne droite à l'état de recouvrement disposé en éventail.

16. Dispositif de fermeture selon l'une quelconque des revendications 1 à 15, **caractérisé en ce qu'**une section de cercle est attenante au moins avec un côté à une partie angulaire de tenture avec bordure arquée à l'état de recouvrement disposé en éventail de l'élément de recouvrement (16, 16').

17. Dispositif de fermeture selon l'une quelconque des revendications 1 à 16, **caractérisé en ce qu'**à l'état de recouvrement disposé en éventail de l'élément de recouvrement (16, 16'), son bord de tenture (22) ne s'étend pour l'essentiel pas en zigzag mais presque en ligne droite et forme un élément de stabilisation qui empêche l'élément de recouvrement (16, 16') de sortir du plan d'ouverture.

18. Dispositif de fermeture selon l'une quelconque des revendications 1 à 17, **caractérisé en ce qu'**à l'état de recouvrement disposé en éventail de l'élément de recouvrement (16, 16'), une section de cercle est attenante au moins avec un côté à une zone de tenture triangulaire ou à une partie angulaire de tenture avec bordure arquée.

19. Dispositif de fermeture selon l'une quelconque des revendications 1 à 18, **caractérisé en ce qu'**à l'état de recouvrement disposé en éventail de l'élément de recouvrement (16, 16'), son bord de tenture (22) ne s'étend pour l'essentiel pas en zigzag mais presque en ligne droite et forme un élément de stabilisation qui empêche l'élément de recouvrement (16, 16') de sortir du plan d'ouverture.
